# EUROPEAN PATENT SPECIFICATION

(11) **EP 3 296 165 B1**
(45) Date of publication and mention of the grant of the patent: **30.12.2020**
(21) Application number: 16792756.5
(22) Date of filing: 12.05.2016
(51) Int. Cl.: B60S 1/08, B60S 1/46, B60S 1/48

(54) **WINDSHIELD WIPER SYSTEM CONTROL DEVICE**
VORRICHTUNG ZUR REGELUNG EINES WINDSCHUTZSCHEIBENWISCHERSYSTEMS
DISPOSITIF DE COMMANDE DE SYSTÈME D'ESSUIE-GLACE

(30) Priority: 14.05.2015 JP 2015098797; 14.05.2015 JP 2015098798; 19.01.2016 JP 2016008006
(43) Date of publication of application: 21.03.2018
(73) Proprietor: Mitsuba Corporation, Kiryu-shi, Gunma 376-8555 (JP)
(72) Inventor: AMAGASA, Toshiyuki, Kiryu-shi Gunma 376-8555 (JP); IWAZAKI, Mikihito, Kiryu-shi Gunma 376-8555 (JP); NAGAHARA, Yasuhiro, Kiryu-shi Gunma 376-8555 (JP); TADENUMA, Kazuya, Kiryu-shi Gunma 376-8555 (JP); IKEDA, Hironori, Kiryu-shi Gunma 376-8555 (JP); KOBORI, Narimitsu, Kiryu-shi Gunma 376-8555 (JP)
(74) Representative: Hoffmann Eitle
(86) International application number: PCT/JP2016/064184
(87) International publication number: WO 2016/182031

(56) References cited:
- WO-A1-2007/013320
- JP-A- 2000 255 384
- JP-A- 2002 178 881
- JP-A- 2002 301 996
- JP-A- 2002 362 322
- JP-A- 2004 194 418
- JP-A- 2008 189 158
- JP-A- 2009 090 780
- JP-A- 2015 205 574
- JP-A- 2015 205 574
- JP-A- 2016 022 900
- JP-A- 2016 022 900
- US-A- 5 142 433
- US-A- 6 069 461

## Description

### Technical Field

The present invention relates to a drive controller for a vehicle wiper system and, more particularly, to a wiper system control device that achieves wiper blade operation control and window washer liquid ejection control in a single control device.

### Background Art

Generally, in a vehicle wiper system mounted on an automobile and the like, a wiper blade disposed on a wiping surface is actuated by one or two electric motors. For example, in an automobile front wiper, two wiper blades on a driver's seat side (DR side) and an assistant's seat side (AS side) are actuated by actuating a link mechanism using one electric motor or by performing synchronous control using two electric motors. In recent automobiles, a wiper device is often provided on a rear window as well, and the rear wiper is also driven by an electric motor.

Further, in order to remove dirt or mud on a wiping surface,
many wiper systems are provided with a window washer device configured to eject washer liquid to a washing surface. In the window washer device, the washer liquid (window washer liquid) is supplied to a washer nozzle by a pump driven by an electric motor and sprayed onto the wiping surface together with wiping operation of a wiper blade.
JP 2004-194418 A discloses a controller of an electric motor to prevent the damage of a switching element by preventing short circuiting current, and to reduce the cost of the controller of an electric motor.

### Citation List

### Patent Document

Patent Document 1: JP 03-75063A (Utility model)
Patent Document 2: JP 05-56699A (Utility model)
Patent Document 4: JP 2001-26255A
Patent Document 5: JP 2002-123304A
Patent Document 6: JP 2004-148897A

### Disclosure of the Invention

### Problems to be Solved by the Invention

However, in order to finely control a visibility securing device for a vehicle, control units are required to control individual electric motors, thus posing problems in terms of on-vehicle layout and device cost. In this case, a configuration can be considered, where a relay mechanism that drives individual devices is mounted in a front wiper motor, and the motors are controlled by relay operation to reduce the number of the control units required. However, in such a configuration, the control units are affected by temperature rise due to heat generation of the motor, making it difficult to perform continuous operation at a high temperature. Further, in spite of increasing the size of the controller, it makes difficult to achieve fine control by ON/OFF operation of the relay mechanism.

On the other hand, the window washer device is required to eject an optimum amount of the washer liquid onto a glass surface for stable wiping based on uniform water film formation, reduction in the replenishing frequency of the washer liquid, and the like. In order to cope with such requirements, a system that ejects the washer liquid from a wiper arm or a wiper blade and a system that switches the ejection direction of the washer liquid between forward travel and backward travel to always sprinkle the water liquid in the wiper traveling direction have been launched. However, such systems require a drive circuit to perform switching of the ejection direction, and thus a control circuit dedicated for the washer is required. When this control circuit is integrated with the motor, a wide area for mounting control elements and a heat radiation structure are required, resulting in increase in the motor size.

Further, in order to adequately control the ejection amount of the washer liquid to reduce the replenishing frequency thereof, it is necessary to control an electric motor for the washer liquid (hereinafter, referred to as "washer motor") as necessary to control the amount of the washer liquid to be supplied. However, to provide a control circuit for the washer motor as an independent control unit involves restriction on layout and increase in the number of components. Thus, although a method that incorporates the control circuit for the washer motor in a motor for wiper drive (hereinafter, referred to as "wiper motor") has been considered, the size of a drive circuit is increased to increase the motor size, resulting in degradation in layout efficiency.

Further, it is the most ideal that washer liquid is ejected to the front side in the operation direction of the wiper blade; however, in order to change the ejection direction in response to the reciprocation of the wiper blade by one motor, the washer motor needs to be rotationally driven forward and backward. In this case, however, a bridge circuit using four FETs needs to be provided as a drive circuit for the washer motor. Thus, taken together with drive circuits for forward and backward rotational drive, a total of nine FETs are required including a battery reverse connection protection circuit. That is, a control part includes a very large scale circuit having nine FETs, with the result that deterioration in layout efficiency due to increase in the motor size cannot be avoided as above. Further, a dedicated module including the nine FETs may be very expensive unless it is expected to be used for other purposes, so that producing the dedicated module is disadvantageous in terms of cost.

### Means for Solving the Problems

A wiper system control device according to the present invention is a control device of a wiper system provided with at least one wiper motor and at least one other motor different from the wiper motor, the control device being characterized by comprising a FET module incorporating, in one package, at least two FETs for drive of the wiper motor, at least two FETs for drive of the other motor, and at least one FET for circuit protection at the time of power supply reverse connection.

In the wiper system control device, the wiper system may have a front wiper for wiping a windshield of a vehicle and a front wiper motor for driving the front wiper as the wiper motor, and the FET module may have four FETs for rotationally driving the front wiper motor forward and backward, two FETs for rotationally driving the other motor in one direction, and one FET for circuit protection at the time of power supply reverse connection.

The wiper system may have a washer nozzle for spraying washer liquid onto the windshield or a rear windshield of a vehicle and a washer motor configured to be rotationally driven in one direction so as to supply the washer liquid to the washer nozzle and to spray the washer liquid onto the vehicle windshield or rear windshield as the other motor.

The wiper system may have a rear wiper for wiping the vehicle rear windshield and a rear wiper motor for driving the rear wiper as the other motor.

The wiper system may have two wiper blades for wiping a windshield of a vehicle, a front wiper motor for driving the wiper blades as the wiper motor, and a link mechanism installed between the wiper blades and the front wiper motor to synchronously drive the two wiper blades.

The wiper system may have two wiper blades for wiping a windshield of a vehicle and two front wiper motors for driving the respective wiper blades as the wiper motor, and the wiper system control device may use two FET modules to synchronously drive the two wiper blades.

The wiper system may have a washer nozzle for spraying washer liquid onto the windshield or a rear windshield of the vehicle and a washer motor configured to be rotationally driven in one direction so as to supply the washer liquid to the washer nozzle and to spray the washer liquid onto the vehicle windshield or rear windshield as the other motor, and the wiper system control device may use two FETs in each of the two FET modules to form a half-bridge circuit in each of the FET modules and use the two half-bridge circuits to rotationally drive the washer motor forward and backward.

The wiper system may have a rear wiper for wiping a rear windshield of a vehicle and a rear wiper motor for driving the rear wiper as the other motor, and the wiper system control device may use two FETs in each of the two FET modules to form a half-bridge circuit in each of the FET modules and use the two half-bridge circuits to rotationally drive the rear wiper motor forward and backward.

The wiper system may have a front wiper for wiping a windshield of a vehicle, a rear wiper for wiping a rear windshield of the vehicle, a washer nozzle for spraying washer liquid onto the windshield or rear windshield, a front wiper motor for driving the front wiper as the wiper motor, and a rear wiper motor and a washer motor as the other motors, the rear wiper motor being a motor for driving the rear wiper, the washer motor being a motor for supplying the washer liquid to the washer nozzle and spraying the washer liquid onto the windshield or rear windshield, and the FET module may have two FETs for rotationally driving the front wiper motor in one direction, two FETs for rotationally driving the rear wiper motor in one direction, two FETs for rotationally driving the washer motor in one direction, and one FET for circuit protection at the time of power supply reverse connection.

The wiper system may have two wiper blades for wiping the vehicle windshield, a front wiper motor for driving the two wiper blades as the wiper motor, and a link mechanism installed between the wiper blades and the front wiper motor to synchronously drive the two wiper blades.

The wiper system may have a front wiper for wiping a windshield of a vehicle and a plurality of washer nozzles for spraying washer liquid onto the windshield or rear windshield, a front wiper motor for driving the front wiper as the wiper motor, and a washer motor rotationally driven forward and backward so as to selectively supply the washer liquid to the washer nozzles and to spray the washer liquid onto the vehicle windshield or rear windshield as the other motor, and the FET module may have two FETs for rotationally driving the front wiper motor in one direction, four FETs for rotationally driving the washer motor forward and backward, and one FET for circuit protection at the time of power supply reverse connection.

The wiper system may have a front wiper for wiping a windshield of a vehicle and a rear wiper for wiping a rear windshield of the vehicle, a front wiper motor for driving the front wiper as the wiper motor, and a rear wiper motor for driving the rear wiper as the other motor, and the FET module may have two FETs for rotationally driving the front wiper motor in one direction, four FETs for rotationally driving the rear wiper motor forward and backward, and one FET for circuit protection at the time of power supply reverse connection.

The wiper system may have a front wiper for wiping a windshield of a vehicle and a front wiper motor for driving the front wiper as the wiper motor, and the FET module may be mounted on a control board incorporated in the front wiper motor.

The control board may have thereon a rotation signal transmitting/receiving part for transmitting and receiving a signal to rotate the other motor. The wiper motor and the other motor may be connected to each other through a signal transmitting part for transmitting the signal.

The FET module may be a module for driving a three-phase brushless motor provided with seven FETs. By using the module for driving a three-phase brushless motor, it is possible to constitute the control device of the invention with general-purpose components, thus eliminating the need to produce dedicated electronic components, which leads to reduction in production cost.

### Advantages of the Invention

In the wiper system provided with at least one wiper motor and at least one other motor, the wiper system control device uses a FET module incorporating, in one package, at least two FETs for drive of the wiper motor, at least two FETs for drive of the other motor, and at least one FET for circuit protection at the time of power supply reverse connection. With this configuration, it is possible to realize a compact controller capable of controlling both the wiper motor and the other motor without involving increase in the size of the drive circuit. Thus, the size of the motor is reduced and the number of components is reduced, resulting in cost reduction.

### Brief Description of the Drawings

FIG. 1 is an explanatory view illustrating the configuration of a wiper system according to a first embodiment of the present invention.
FIG. 2 is an explanatory view illustrating the configuration of a controller used in the wiper system of FIG. 1, which shows a state where a cover is removed.
FIG. 3 is a block diagram illustrating the circuit configuration of the controller of FIG. 2.
FIG. 4 is an explanatory view illustrating the configuration of a wiper system according to a second embodiment of the present invention.
FIG. 5 is an explanatory view illustrating the configuration of a washer nozzles used in the wiper system of FIG. 4.
FIG. 6 is a block diagram illustrating the circuit configurations of controllers used in the wiper system of FIG. 4.
FIG. 7 is an explanatory view illustrating the configuration of a wiper system according to a third embodiment of the present invention.
FIG. 8 is block diagram illustrating the circuit configuration of a controller used in the wiper system of FIG. 7.
FIG. 9 is an explanatory view illustrating the configuration of a wiper system according to a fourth embodiment of the present invention.
FIG. 10 is a block diagram illustrating the circuit configurations of controllers used in the wiper system of FIG. 9.
FIG. 11 is an explanatory view illustrating the configuration of a wiper system according to a fifth embodiment of the present invention.
FIG. 12 is a block diagram illustrating the circuit configuration of a controller used in the wiper system of FIG. 11.
FIG. 13 is an explanatory view illustrating the configuration of a wiper system according to a sixth embodiment of the present invention.
FIG. 14 is a block diagram illustrating the circuit configuration of a controller used in the wiper system of FIG. 13.
FIG. 15 is an explanatory view illustrating the configuration of a wiper system according to a seventh embodiment of the present invention.
FIG. 16 is a block diagram illustrating the circuit configuration of a controller used in the wiper system of FIG. 15.
FIG. 17 is a block diagram illustrating another example of the circuit configuration of the controller of FIG. 12.

### Best Mode for Carrying Out the Invention

Hereinafter, embodiments of the present invention will be described in detail based on the drawings. The object of the embodiments described below is to provide a wiper system control device capable of achieving operation control of a wiper blade and ejection control of window washer liquid with a compact configuration.

### (First Embodiment)

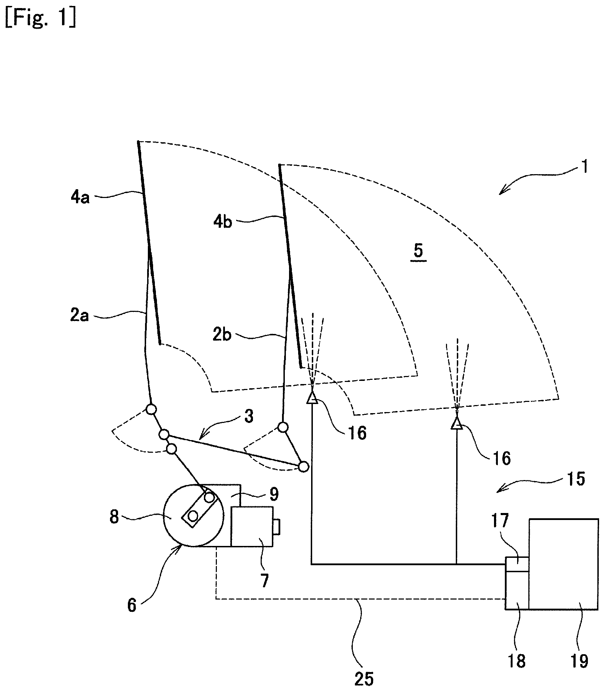

FIG. 1 is an explanatory view illustrating the configuration of a wiper system 1 according to a first embodiment. The wiper system is drive-controlled by a control device provided by the present invention. The wiper system 1 has a front wiper and a window washer device. The control device uses one FET (Field Effect Transistor) module to rotationally drive one front wiper motor forward and backward and rotationally drive one washer motor in one direction.

As illustrated in FIG. 1, the wiper system 1 has a driver's seat side wiper arm 2a and an assistant's seat side wiper arm 2b. The wiper arms 2a and 2b are connected to each other by a link mechanism 3. The wiper arms 2a and 2b are attached with wiper blades 4a and 4b, respectively, for wiping a glass surface. The wiper blades 4a and 4b are brought into elastic contact with a windshield (wiping surface) 5 by unillustrated spring members or the like incorporated in the wiper arms 2a and 2b. The link mechanism 3 is connected to a motor unit 6. The wiper blades 4a and 4b are driven by the motor unit 6 through the link mechanism 3.

The wiper system 1 is further provided with a window washer device 15. The window washer device 15 has washer nozzles 16 that eject washer liquid onto the glass surface and a washer pump 17 for supplying the washer liquid to the washer nozzles 16. The washer pump 17 is driven by a washer motor (other motor) 18 and supplies the washer liquid stored in a washer tank 19 to the washer nozzles 16 at a predetermined pressure. The washer liquid is sprayed from the washer nozzles 16 at a pressure according to the rotating speed of the washer motor 18.

The motor unit 6 has a wiper motor (front wiper motor) 7 and a decelerating mechanism 8. The wiper motor 7 is provided with a sensor for detecting the relative positions of the wiper blades 4a and 4b. The decelerating mechanism 8 is provided with a sensor for detecting the absolute positions (e.g., lower inversion position) of the wiper blades 4a and 4b. The relative position detecting sensor outputs a pulse signal with rotation of the motor. The absolute position detecting sensor outputs a signal corresponding to the positions of the wiper blades 4a and 4b.

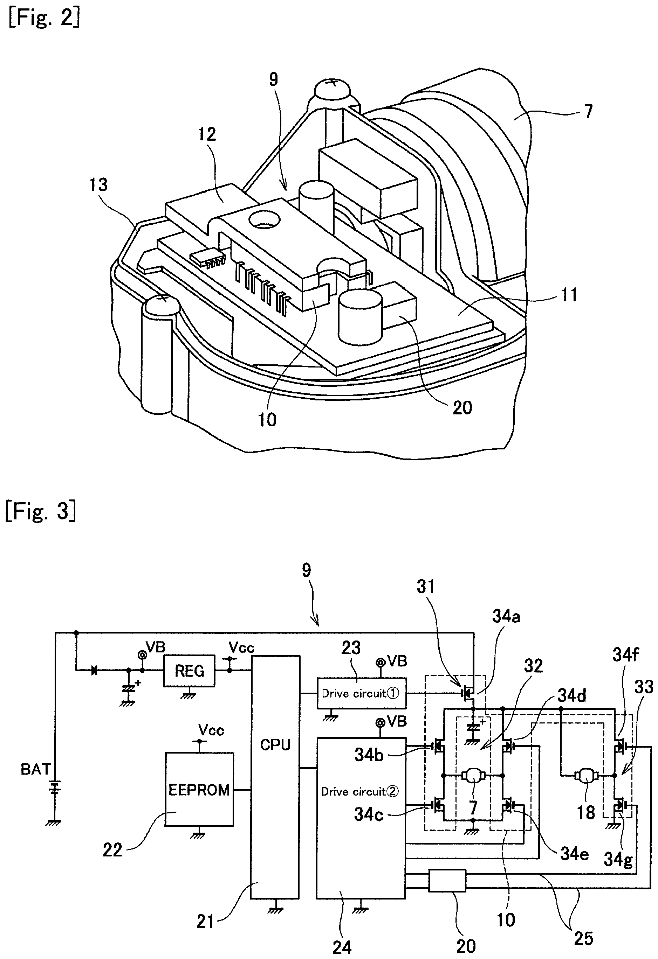

The motor unit 6 is integrally provided with a controller (wiper system control device) 9, and the wiper motor 7 is controlled by the controller 9. FIG. 2 is an explanatory view illustrating the configuration of the controller 9. The controller 9 is provided with a FET module 10, a rotation signal transmitting/receiving part 20, and a control board 11 mounting an unillustrated sensor and the like thereon. A metal heat plate 12 formed of, e.g., aluminum is mounted to the FET module 10. One end side of the heat plate 12 contacts a frame 13 of the motor unit 6, and heat generated in the FET module 10 is radiated to the frame 13 through the heat plate 12. This eliminates the need to increase the size of the control board 11 in consideration of heat radiation, thereby achieving miniaturization of the controller 9.

FIG. 3 is a block diagram illustrating the circuit configuration of the controller 9. As illustrated in FIG. 3, the controller 9 has a CPU 21 in which a control program is installed, together with the FET module 10 and the rotation signal transmitting/receiving part 20. The controller 9 further has a ROM 22 storing various control data therein, a first drive circuit 23, and a second drive circuit 24. The CPU 21 calculates position information (current positions) of the wiper blades 4a and 4b based on signals output from the respective sensors and controls forward and backward rotational drive of the wiper motor 7 or rotating speed thereof while referring to the control data stored in the ROM 22. The CPU 21 controls the washer motor 18 by a signal transmitted thereto from the rotation signal transmitting/receiving part 20 through a signal line 25 in conjunction with operation of an unillustrated window washer switch. Under such control, washer liquid is ejected onto the glass surface appropriately. In place of the signal line 25, a signal may be transmitted/received by wireless.

The controller 9 uses, as the FET module 10, a general-purpose FET module used for driving a three-phase brushless motor. In general, the FET module for the three-phase drive includes a total of seven FETs (one reverse connection protection FET and three sets of two FETs for driving each phase) . That is, six FETs are mounted on the general-purpose FET module in addition to the reverse connection protection FET. On the other hand, in the wiper system, four FETs and two FETs are required respectively for forward and backward rotational drive of the wiper motor 7 and for drive of the washer motor 18. The present inventor found that the number of the three-phase drive FETs of the general-propose module and the number of FETs required for the wiper motor and washer motor are each six and came to the conclusion that the general-purpose FET module is applied to control of the wiper system.

Thus, of the six FETs for drive of the respective phases, the controller 9 according to the present invention uses four FETs for forward and backward rotational drive of the wiper motor 7 and uses the remaining two FETs for drive of the washer motor 18. As illustrated in FIG. 3, the FET module 10 is partitioned into a battery reverse connection protection part 31, a wiper motor drive part 32, and a washer motor drive part 33. The battery reverse connection protection part 31 is provided with one FET 34a, the wiper motor drive part 32 is provided with four FETs 34b to 34e, and the washer motor drive part 33 is provided with two FETs 34f and 34g. In the wiper motor drive part 32, a bridge circuit for forward and backward rotational drive of the wiper motor 7 is formed by the FETs 34b to 34e.

In the FET module 10, the FETs 34b to 34e are turned ON/OFF appropriately by the CPU (Central Processing Unit) 21 and first and second drive circuits 23 and 24 based on the position information of the wiper blades 4a and 4b to thereby control forward and backward rotational drive of the wiper motor 7. Further, the FETs 34f and 34g are turned ON/OFF appropriately by the CPU 21 and the first and second drive circuits 23 and 24 in conjunction with operation of the window washer switch to thereby control operation of the washer motor 18. Under the above control, the wiper blades 4a and 4b perform reciprocating wiping operation on the glass surface and washer liquid is ejected onto the glass surface in response to the switch operation.

As described above, in the present invention, the general-purpose FET module for three-phase motor drive is diverted to control of the wiper system, whereby the controller 9 can be constituted by a FET module incorporating the wiper drive FETs, washer drive FETs, and reverse connection protection FET in one package. As a result, it is possible to realize a compact controller capable of controlling both the wiper motor and the washer motor without involving increase in the size of the drive circuit. Thus, the size of the controller-integrated motor can be reduced. Further, there is no need to provide the control circuit of the washer motor as an independent control unit, so that the number of components can be reduced, resulting in cost reduction. Furthermore, efficient layout of the wiper system can be achieved by reducing the size of the FET module and forming the FET module into one component.

### (Second Embodiment)

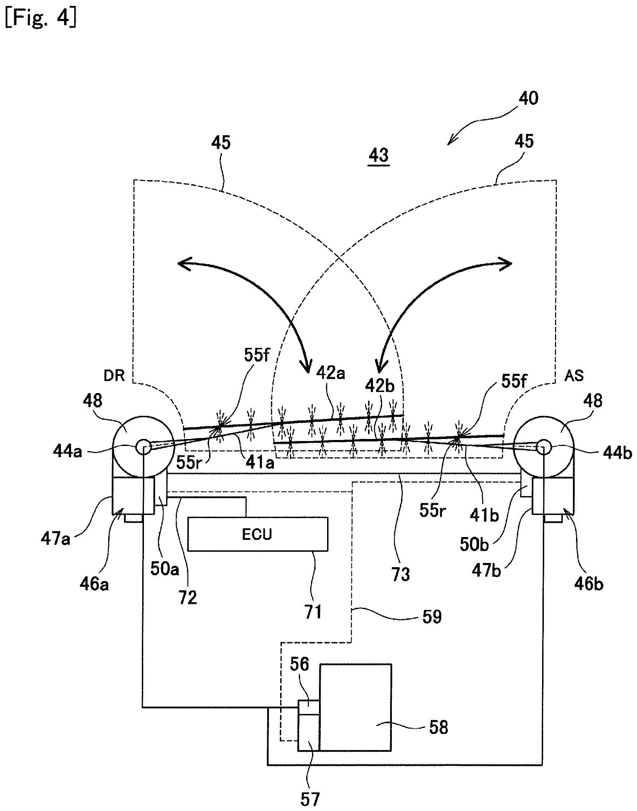

Next, a case where the present invention is applied to a wiper system in which two wiper motors are used to actuate the respective driver's seat side and assistant's seat side wiper blades will be described as a second embodiment of the present invention. FIG. 4 is an explanatory view illustrating the configuration of a wiper system 40. The wiper system 40 is also drive-controlled by the control device provided by the present invention. The wiper system 40 has a front wiper and a window washer device. The control device uses two FET modules to rotationally drive two front wiper motors forward and backward and rotational ly drive one washer motor forward and backward.

The wiper system 40 is an opposing wiping type wiper system, in which a driver's seat side (DR side) wiper arm 41a and an assistant's seat side (AS side) wiper arm 41b are disposed opposite to each other. The wiper arms 41a and 41b are attached with wiper blades 42a and 42b, respectively. The wiper blades 42a and 42b are brought into elastic contact with a windshield 43 by unillustrated spring members or the like incorporated in the wiper arms 41a and 41b.

Two wiper shafts (pivot shafts) 44a and 44b are fixed to a vehicle body. The base end portions of the wiper arms 41a and 41b are fixed to the wiper shafts 44a and 44b, respectively, thereby forming a so-called direct drive wiper. The symbols "a" and "b" attached to the reference numerals indicate components or portions provided on the driver's seat side and the assistant's seat side, respectively. In order to swing the wiper arms 41a and 41b, the wiper system 40 has two motor units 46a and 46b which are subjected to PWM (Pulse Width Modulation) duty control. The motor units 46a and 46b each include a wiper motor (front wiper motor) (47a, 47b) and a decelerating mechanism 48.

The wiper motors 47a and 47b are drive-controlled by controllers (wiper system control devices) 50a and 50b, respectively, to be rotationally driven forward and backward. Like the controller 9 of the first embodiment, the controllers 50a and 50b are integrally provided in the motor units 46a and 46b, respectively, and each have a control board like one illustrated in FIG. 2. The controllers in the following embodiments have the same configuration.

The controller 50a that drive-controls the wiper motor 47a is connected to an ECU (Engine Control Unit) 71 as a vehicle side controller through an on-vehicle LAN (Local Area Network) 72. Switch information such as ON/OFF, Lo, Hi, INT (intermittent operation) or the like of a wiper switch, engine start-up information, and the like are input from the ECU 71 to the controller 50a through the LAN 72. The wiper controllers 50a and 50b are connected to each other through a communication line 73.

In the wiper system 40, the wiper motors 47a and 47b are feedback-controlled (PI-controlled) based on position information of the wiper blades 42a and 42b, respectively. In this example, target speeds of both blades are set according to the positions of the respective wiper blades 42a and 42b. The target speeds are previously stored in the respective controllers 50a and 50b in the form of a map or the like. The controllers 50a and 50b detect current positions of the respective wiper blades 42a and 42b and detects moving speeds of the respective wiper blades 42a and 42b from rotating speeds of the respective wiper shafts 44a and 44b. The rotating speeds of the wiper shafts 44a and 44b are each detected by a sensor magnet (not illustrated) mounted to the wiper shaft (44a, 44b) or the rotary axis of the wiper motor (47a, 47b) and a magnetic sensor (not illustrated) disposed opposite to the sensor magnet. The controllers 50a and 50b compare the current speeds of the wiper blades 42a and 42b with the target speeds of the wiper blades 42a and 42b at the positions where the current speeds are detected and appropriately control the respective wiper motors 47a and 47b according to a difference between the target speed and the current speed.

Control information of the wiper motors 47a and 47b is exchanged between the controllers 50a and 50b through the communication line 73, and the wiper motors 47a and 47b are subjected to synchronous control based on the positional relationship between the blades. That is, the controllers 50a and 50b control forward and backward rotational drive of the wiper motors 47a and 47b, respectively, based on the positions of their corresponding blades and, at the same time, control the wiper motors 47a and 47b based on the blade position information of the wiper blades 42a and 42b to thereby control the wiper system so as not to cause interference between the blades or not to increase a difference in angle therebetween. As a result, the wiper blades 42a and 42b are each brought into swing movement between a lower inversion position and an upper inversion position within a wiping range 45, whereby rain or snow adhered to the windshield 43 is wiped away therefrom.

In the wiper system 40, washer nozzles 55 (55f, 55r) for ejecting washer liquid onto the glass surface are formed in each of the wiper blades 42a and 42b. The washer nozzles 55 are supplied with washer liquid from a washer pump 56. The washer pump 56 is driven by a washer motor (other motor) 57 to supply washer liquid stored in a washer tank 58 to the washer nozzles 55 at a predetermined pressure. The washer liquid is sprayed from the washer nozzles 55 at a pressure according to the rotating speed of the washer motor 57. The washer motor 57 is drive-controlled by a signal transmitted thereto from a rotation signal transmitting/receiving part 60 of each of the controllers 50a and 50b through a signal line 59.

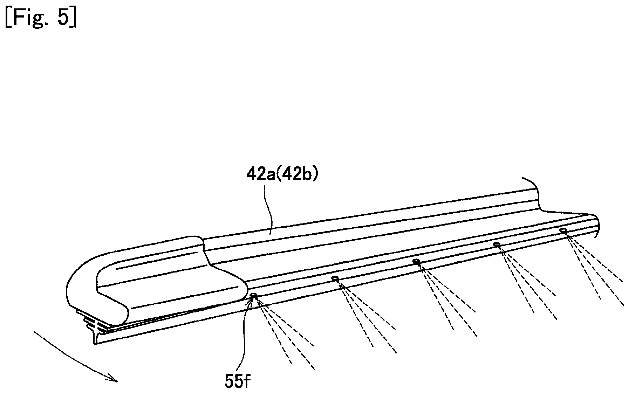

FIG. 5 is an explanatory view illustrating the configuration of the washer nozzles 55. As illustrated in FIG. 4 or FIG. 5, the washer nozzles 55 are formed in both side surfaces of each of the wiper blades 42a and 42b. Washer nozzles 55f are formed in one surface side of each of the wiper blades 42a and 42b, and washer nozzles 55r are formed in the other surface side thereof. Washer liquid is ejected from the nozzles on the front side in the travel direction of each of the wiper blades 42a and 42b. That is, when the wiper blades 42a and 42b are moved forward, the washer liquid is sprayed from the washer nozzles 55f, while when the wiper blades 42a and 42b are moved backward, the washer liquid is sprayed from the washer nozzles 55r. Switching between the nozzles 55f and 55r is achieved by switching of the rotation direction (forward and backward rotation) of the washer motor 57.

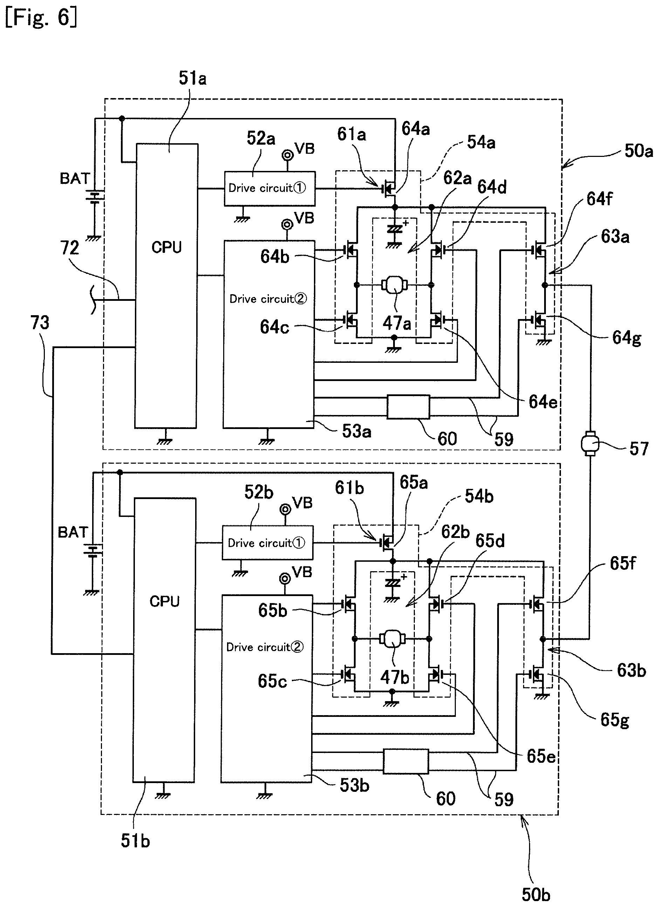

FIG. 6 is a block diagram illustrating the circuit configurations of the respective controllers 50a and 50b. The controller 50a and the controller 50b are a DR-side controller and an AS-side controller, respectively, and have the same configuration. As illustrated in FIG. 6, the controllers 50a and 50b are provided with CPUs 51a and 51b each in which a control program is installed, together with FET modules 54a and 54b and the rotation signal transmitting/receiving part 60. Further, the controllers 50a and 50b are provided with first drive circuits 52a and 52b and second drive circuits 53a and 53b, respectively. In the second embodiment, various control data are stored in the vehicle-side ECU 71.

The CPUs 51a and 51b calculate position information (current positions) of the wiper blades 42a and 42b based on signals output from the respective sensors and controls forward and backward rotational drive of the wiper motors 47a and 47b or rotating speeds thereof while referring to the control data stored in the ECU 71. Further, the CPUs 51a and 51b control forward and backward rotational drive of the washer motor 57 or rotating speed thereof by a signal transmitted thereto from the rotation signal transmitting/receiving part 60 through the signal line 59 in conjunction with operation of an unillustrated window washer switch. Under such control, washer liquid is ejected onto the glass surface appropriately from the washer nozzles 55f or 55r.

Also in the wiper system 40, the general-purpose FET module used for driving a three-phase brushless motor is used as each of FET modules 54a and 54b of the respective controllers 50a and 50b. As described above, in general, the FET module for the three-phase drive includes a total of seven FETs (one reverse connection protection FET and three sets of two FETs for driving each phase) . On the other hand, in the wiper system according to the second embodiment, four FETs are required for forward and backward rotational drive of the wiper motor 7, and a total of eight FETs are required for DR and AS. Further, four FETs are required for forward and backward rotational drive of the washer motor 57.

When four of six FETs (7 (seven FETs for three-phase drive) - 1 (one FET for reverse connection protection)) are used for wiper motor forward and backward rotational drive, there are two surplus FETs. Then, when the two FET modules are used for DR and AS, there are four surplus FETs, which can be used for forward and backward rotational drive of the washer motor. That is, when two general-purpose FET modules are applied to control of the two-motor type wiper system, forward and backward rotational drive of the washer motor can also be achieved.

Thus, of the six FETs for drive of the respective phases, the controllers 50a and 50b according to the present invention use four FETs for forward and backward rotational drive of the wiper motors 47a and 47b, and use the remaining four FETs (two FETs and two FETs) for forward and backward rotational drive of the washer motor 57. As illustrated in FIG. 6, the FET modules 54a and 54b are partitioned into battery reverse connection protection parts 61a and 61b, (front) wiper motor drive parts 62a and 62b, and washer motor drive parts 63a and 63b, respectively. The battery reverse connection protection parts 61a and 61b are provided with one FET 64a and one FET 65a, respectively, the wiper motor drive parts 62a and 62b are provided with four FETs 64b to 64e and four FETs 65b to 65e, respectively, and washer motor drive parts 63a and 63b are provided with two FETs 64f and 64g and two FETs 65f and 65g, respectively.

In the wiper motor drive parts 62a and 62b, bridge circuits for forward and backward rotational drive of the respective wiper motors 47a and 47b are formed by the FETs 64b to 64e and FETs 65b to 65e, respectively. Further, in the washer motor drive parts 63a and 63b, two half-bridge circuits are formed by two FETs 64f and 64g and two FETs 65f and 65g, respectively. A bridge circuit for forward and backward rotational drive of the washer motor 57 is formed by the two half-bridge circuits.

In the FET modules 54a and 54b, the FETs 64b to 64e and FETs 65b to 65e are turned ON/OFF appropriately by the CPU 51a and CPU 51b, and first and second drive circuits 52a and 52b and first and second drive circuits 53a and 53b based on the position information of the wiper blades 42a and 42b to thereby control forward and backward rotational drive of the wiper motors 47a and 47b. Under the above control, the wiper blades 42a and 42b perform reciprocating wiping operation on the glass surface. Further, the FETs 64f and 64g and FETs 65f and 65g are turned ON/OFF appropriately by the CPU 51a and CPU 51b and first and second drive circuits 52a and 52b and first and second drive circuits 52a and 53b in conjunction with operation of the window washer switch to thereby control forward and backward rotational drive of the washer motor 57. Under the above control, washer liquid is selectively supplied to the nozzles 55f and 55r in sync with movement of the wiper blades 42a and 42b and appropriately ejected onto the glass surface toward the blade travel direction.

As described above, in the present invention, the general-purpose FET module for three-phase motor drive is diverted to control of the wiper system, whereby each of the controllers 50a and 50b can be constituted by a FET module incorporating the wiper drive FETs, washer drive FETs, and reverse connection protection FET in one package. As a result, it is possible to realize a compact controller capable of controlling both the wiper motor and the washer motor without involving increase in the size of the drive circuit. Further, it is possible to realize a circuit capable of achieving fine ejection control (e.g., switching the ejection direction between the forward travel and backward travel) of the washer liquid in a compact layout. Thus, as in the first embodiment, the size of the motor can be reduced. Further, there is no need to provide a control unit of the washer motor as an independent unit, so that the number of components can be reduced, resulting in cost reduction, which in turn leads to efficient layout of the wiper system.

### (Third Embodiment)

Next, as a third embodiment of the present invention, a case where the control target is set to motors for respective front and rear wipers will be described. A wiper system 80 according to the third embodiment includes a front wiper and a rear wiper, and the control device uses one FET module to rotationally drive one front wiper motor forward and backward and rotationally drive one rear wiper motor in one direction.

When the control devices are provided for the motors of both front and rear wipers, respectively, in order to control drive of both the wipers, efficient layout is difficult to achieve, and the number of components is increased. Thus, in the third embodiment, in place of the washer motor in the first embodiment, the rear wiper motor is drive-controlled by a controller using one FET module so as to achieve efficient layout or reduce the number of components.

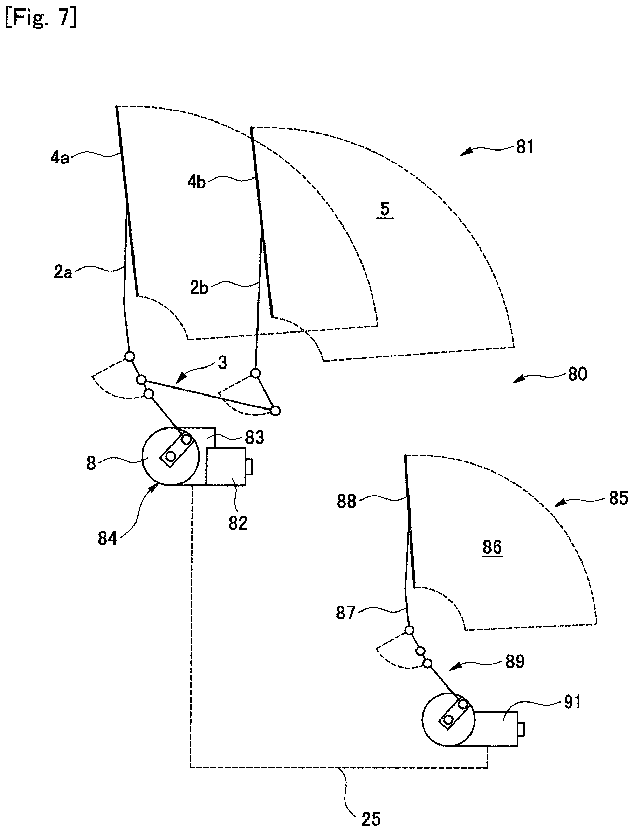

FIG. 7 is an explanatory view illustrating the configuration of the wiper system 80 according to the third embodiment. In the following embodiments, the same reference numerals are given to the same components as in the first and second embodiments and descriptions thereof will be omitted. As illustrated in FIG. 7, as in the first embodiment, a front wiper 81 of the wiper system 80 is a parallel wiping type wiper device rotationally driven forward and backward by one motor. The front wiper 81 has the driver's seat side wiper arm 2a, assistant's seat side wiper arm 2b, and wiper blades (front wiper blades) 4a and 4b. The wiper blades 4a and 4b on the windshield 5 are driven by a front wiper motor (motor for front wiper) 82 through the link mechanism 3. The front wiper motor 82 is controlled by a controller (wiper system control device) 83 provided with the FET module 10. The front wiper motor 82 and controller 83 are integrated with the decelerating mechanism 8 to constitute a motor unit 84. The motor unit 84 is disposed in a vehicle body.

The wiper system 80 is provided with a rear wiper 85 in addition to the front wiper 81. The rear wiper 85 is disposed on a rear windshield 86 at the vehicle rear side and has a wiper arm 87 and a rear wiper blade 88. The wiper arm 87 and the rear wiper blade 88 are driven by a rear wiper motor (motor for rear wiper: other motor) 91 for rotationally driving them in one direction through a link mechanism 89. The rear wiper motor 91 and the front wiper 82 are controlled by the same controller 83. In place of the link mechanism 89 of the rear wiper 85, a crank mechanism, a swinging mechanism using a sector gear, or the like may be incorporated in the rear wiper motor 91 for rotational drive.

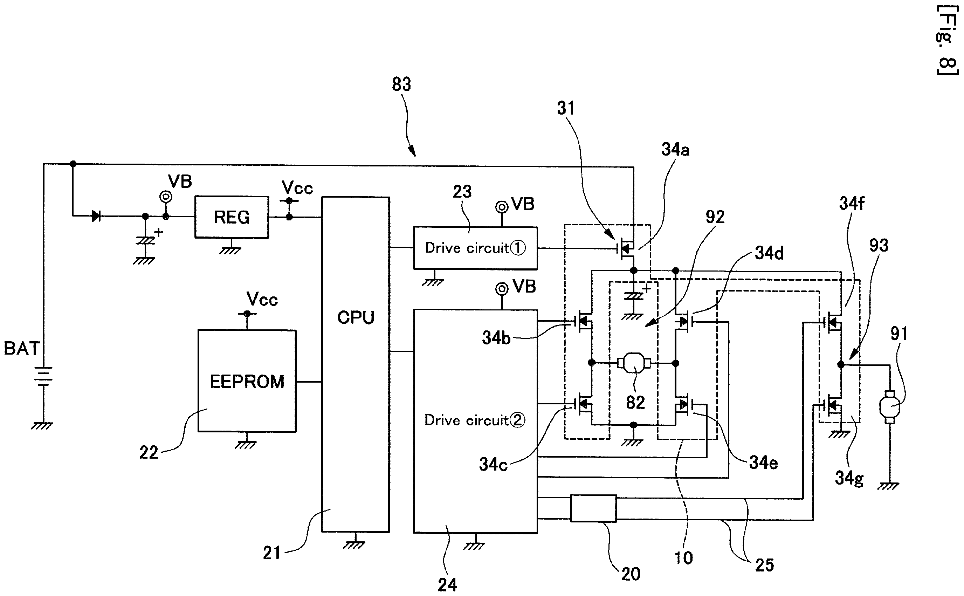

FIG. 8 is block diagram illustrating the circuit configuration of the controller 83. As illustrated in FIG. 8, the controller 83 has the CPU 21, ROM (Read Only Memory) 22, first drive circuit 23, second drive circuit 24, FET module 10, and rotation signal transmitting/receiving part 20, like the controller 9 according to the first embodiment. The CPU 21 calculates position information (current positions) of the wiper blades 4a and 4b and controls forward and backward rotational drive of the front wiper motor 82 or rotating speed thereof while referring to the control data stored in the ROM 22. The CPU 21 controls the rear wiper motor 91 by a signal transmitted thereto from the rotation signal transmitting/receiving part 20 through the signal line 25 in conjunction with operation of an unillustrated rear wiper switch and actuates the rear wiper blade 88 of the rear wiper 85 on the rear windshield 86.

The controller 83 also uses, as the FET module 10, a general-purpose FET module used for driving a three-phase brushless motor. In the wiper system 80, four FETs and two FETs are required respectively for forward and backward rotational drive of the wiper motor 82 and for drive of the rear wiper motor 91. Thus, as described above, the general-purpose FET module can be applied to control of the wiper system 80.

Of the six FETs for drive of the respective phases, the controller 83 uses four FETs for forward and backward rotational drive of the front wiper motor 82 and uses the remaining two FETs for drive of the rear wiper motor 91. As illustrated in FIG. 8, the FET module 10 is partitioned into the battery reverse connection protection part 31, a front wiper motor drive part 92, and a rear wiper motor drive part 93. The battery reverse connection protection part 31 is provided with one FET 34a, the front wiper motor drive part 92 is provided with four FETs 34b to 34e, and the rear wiper motor drive part 93 is provided with two FETs 34f and 34g. In the front wiper motor drive part 92, a bridge circuit for forward and backward rotational drive of the front wiper motor 82 is formed by the FETs 34b to 34e.

As described above, in the FET module 10, the FETs 34b to 34e are turned ON/OFF appropriately by the CPU 21 and the first and second drive circuits 23 and 24 based on the position information of the wiper blades 4a and 4b to thereby control forward and backward rotational drive of the front wiper motor 82. Further, the FETs 34f and 34g are turned ON/OFF appropriately by the CPU 21 and the first and second drive circuits 23 and 24 in conjunction with operation of a rear wiper switch to thereby control operation of the rear wiper motor 91. Under the above control, the wiper blades 4a and 4b perform reciprocating wiping operation on the glass surface and the rear wiper motor 91 also performs reciprocating wiping operation on the rear windshield 86 in response to the switch operation. In this case, the front wiper motor 82 and the rear wiper motor 91 are controlled by the same controller 83. Thus, it is possible to synchronously drive both the motors 82 and 91 to link the operations of the front wiper 81 and rear wiper 85.

As described above, in the present invention, diversion of the general-purpose FET module for three-phase motor drive allows the controller 83 to be constituted by a FET module incorporating the front wiper drive FETs, rear wiper drive FETs, and reverse connection protection FET in one package. As a result, it is possible to realize a compact controller capable of controlling both the front wiper motor 82 and the rear wiper motor 91 without involving increase in the size of the drive circuit. Thus, as in the first embodiment, the motor size can be reduced. Further, there is no need to provide an independent control unit for the rear wiper motor 91, so that the number of components can be reduced, resulting in cost reduction. Further, efficient layout of the wiper system can be achieved.

### (Fourth Embodiment)

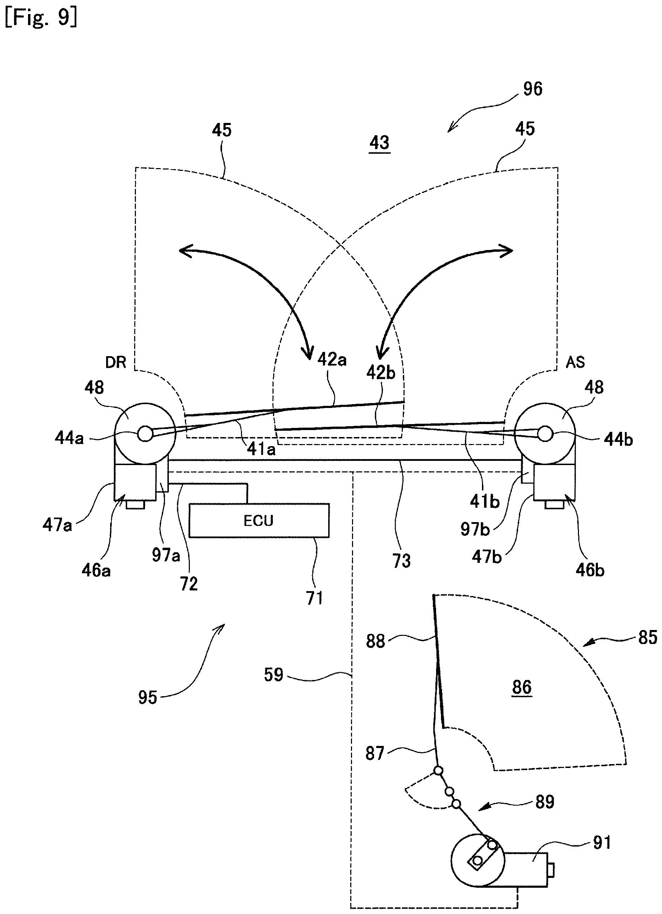

FIG. 9 is an explanatory view illustrating the configuration of a wiper system 95 according to a fourth embodiment of the present invention. The wiper system 95 has a front wiper and a rear wiper. The control device in the present embodiment uses two FET modules to rotationally drive two front wiper motors forward and backward and rotationally drive one rear wiper motor forward and backward.

The wiper system 95 has an opposing wiping type front wiper 96 like the one illustrated in FIG. 4 and the rear wiper 85. The wiper arms 41a and 41b of the front wiper 96 are driven by the motor units 46a and 46b, respectively. The motor units 46a and 46b are provided with the wiper motors 47a and 47b, respectively, and controllers 97a and 97b, respectively.

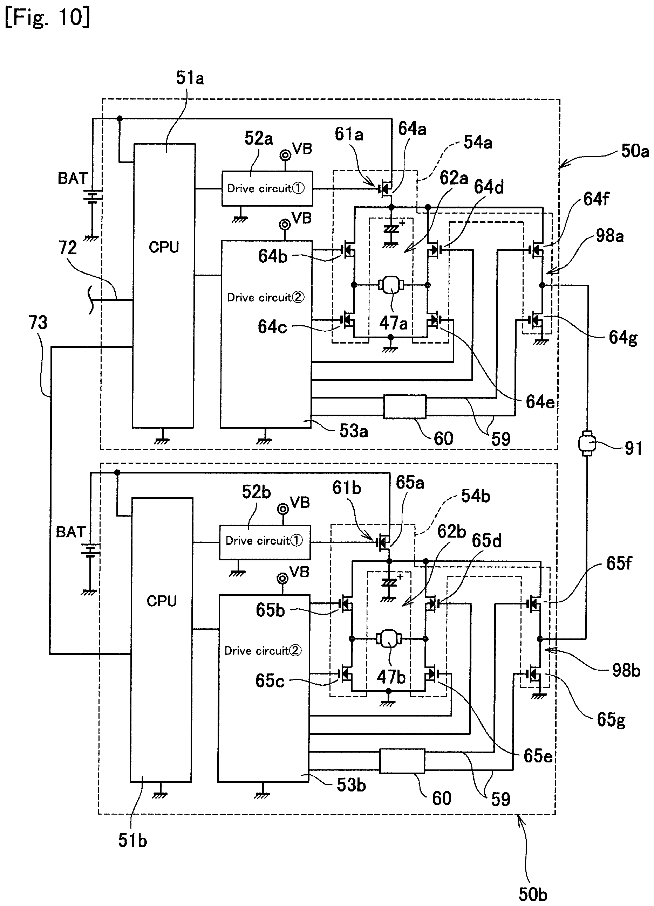

FIG. 10 is a block diagram illustrating the circuit configurations of the respective controllers 97a and 97b. The controllers 97a and 97b have the same configuration as each other and that of the controllers 50a and 50b of FIG. 6; however, the object to be drive-controlled by the half-bridge circuit is not set to the washer motor, but set to the rear wiper motor 91. That is, the washer motor drive parts 63a and 63b of FIG. 6 is replaced with rear wiper motor drive parts 98a and 98b.

In the wiper system 95, the FET modules 54a and 54b are partitioned into the battery reverse connection protection parts 61a and 61b, front wiper motor drive parts 62a and 62b, and rear wiper motor drive parts 98a and 98b, respectively. The battery reverse connection protection parts 61a and 61b are provided with one FET 64a and one FET 65a, respectively, the front wiper motor drive parts 62a and 62b are provided with four FETs 64b to 64e and four FETs 65b to 65e, respectively, and the rear wiper motor drive parts 98a and 98b are provided with two FETs 64f and 64g and two FETs 65f and 65g, respectively. In the rear wiper motor drive parts 98a and 98b, two half-bridge circuits are formed by the two FETs 64f and 64g and two FETs 65f and 65g, respectively. Abridge circuit for forward and backward rotational drive of the rear wiper motor 91 is formed by the two half-bridge circuits.

Also in the wiper system 70, the general-purpose FET module for three-phase motor drive is diverted to control of the wiper system to constitute each of the controllers 72a and 72b. As a result, it is possible to realize a compact controller capable of controlling both the front wiper motor and the rear wiper motor without involving increase in the size of the drive circuit.

### (Fifth Embodiment)

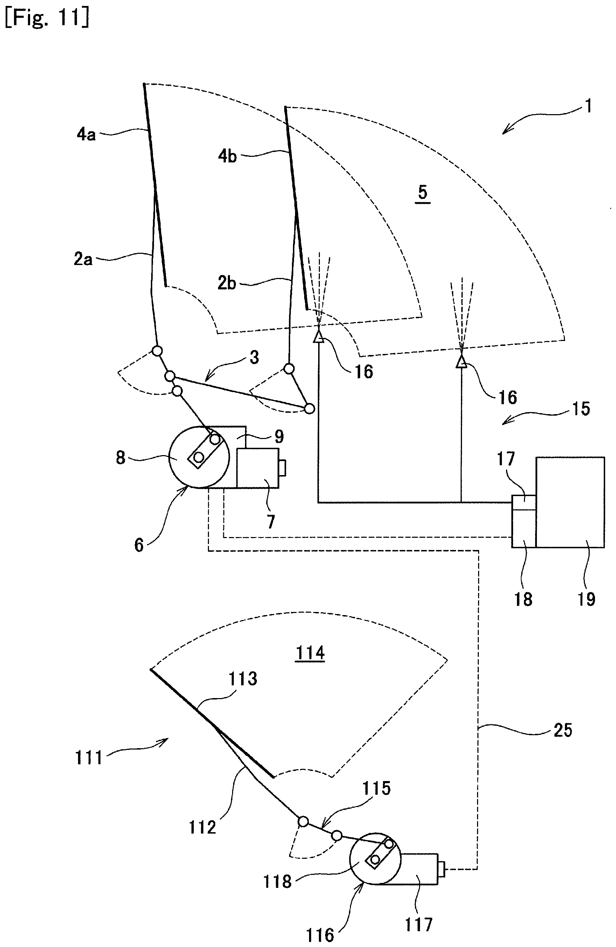

FIG. 11 is an explanatory view illustrating the configuration of a wiper system 100 according to a fifth embodiment of the present invention. As illustrated in FIG. 11, the wiper system 100 has a front wiper 101 for wiping the windshield and a rear wiper 111 for wiping the rear windshield. The front wiper 101 has the same configuration as the front wiper in the wiper system of FIG. 1 and includes the window washer device 15. The window washer device 15 is driven by the washer motor (other motor) 18. The control device in the present embodiment uses one FET module to rotationally drive one front wiper motor, one rear wiper motor, and one washer motor in one direction.

The rear wiper 111 has a wiper arm 112. The wiper arm 112 is attached with a wiper blade 113 for wiping the glass surface. The wiper blade 113 is also brought into elastic contact with a rear windshield 114 by an unillustrated spring member or the like incorporated in the wiper arm 112. The wiper arm 112 is connected to a motor unit 116 through a link mechanism 115. The wiper blade 113 is driven by the motor unit 116.

The motor unit 6 has the front wiper motor (motor for front wiper) and the decelerating mechanism 8, and the motor unit 116 has a rear wiper motor 117 (motor for rear wiper: other motor) and a decelerating mechanism 118. The motor unit 6 is integrally provided with a controller (wiper system control device) 102, and both the wiper motors 7 and 117 and washer motor 18 are controlled by the controller 102. The internal configuration of the controller 9 is the same as that illustrated in FIG. 2.

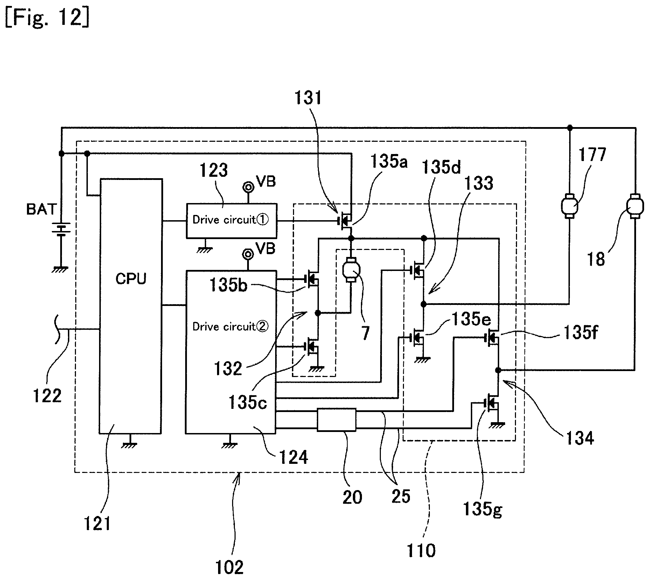

FIG. 12 is a block diagram illustrating the circuit configuration of the controller 102. As illustrated in FIG. 12, the controller 102 has a CPU 121 in which a control program is installed. The CPU 121 is connected to an unillustrated vehicle-side controller (ECU) through an on-vehicle LAN 122. The controller 9 further has a first drive circuit 123, a second drive circuit 124, a FET module 110, and the rotation signal transmitting/receiving part 20. The CPU 121 controls ON/OFF or rotating speeds of the wiper motors 7 and 117 according to an instruction issued by the ECU. Further, the CPU 121 controls the washer motor 18 by a signal transmitted thereto from the rotation signal transmitting/receiving part 20 through a signal line 25 in conjunction with operation of an unillustrated window washer switch. Under such control, washer liquid is ejected onto the glass surface appropriately.

That is, of the six FETs for drive of the respective phases, the controller 102 uses two FETs for drive of the front wiper motor 7, uses two FETs for drive of the rear wiper motor 117, and uses the remaining two FETs for drive of the washer motor 18. As illustrated in FIG. 12, the FET module 110 is partitioned into a battery reverse connection protection part 131, a front wiper motor drive part 132, a rear wiper motor drive part 133, and a washer motor drive part 134. The battery reverse connection protection part 131 is provided with one FET 135a, the front wiper motor drive part 132 is provided with two FETs 135b and 135c, the rear wiper motor drive part 133 is provided with two FETs 135d and 135e and the washer motor drive part 134 is provided with two FETs 135f and 135g.

In the FET module 110, the FETs 135b and 135c are turned ON/OFF appropriately by the CPU 121, and the first and second drive circuits 123 and 123 to thereby control operation of the front wiper motor 7. Similarly, the FETs 135d and 135e are turned ON/OFF appropriately by the CPU 121 and the first and second drive circuits 123 and 123 123 to thereby control operation of the rear wiper motor 117. Further, the FETs 135f and 135g are turned ON/OFF appropriately by the CPU 121, and the first and second drive circuits 123 and 123 in conjunction with operation of the window washer switch to thereby control operation of the washer motor 18 . Under the above control, the wiper blades 4a and 4b perform reciprocating wiping operation on the windshield, the wiper blade 113 performs reciprocating wiping operation on the rear windshield, and washer liquid is appropriately ejected onto the glass surface in response to the switch operation.

As described above, in the present invention, the general-purpose FET module for three-phase motor drive is diverted to control of the wiper system to constitute the controller 102 by an FET module incorporating the front wiper drive FET, rear wiper drive FET, and washer drive FET, and reverse connection protection FET in one package. As a result, it is possible to realize a compact controller capable of controlling the front and rear wiper motors and the washer motor without involving increase in the size of the drive circuit.

### (Sixth Embodiment)

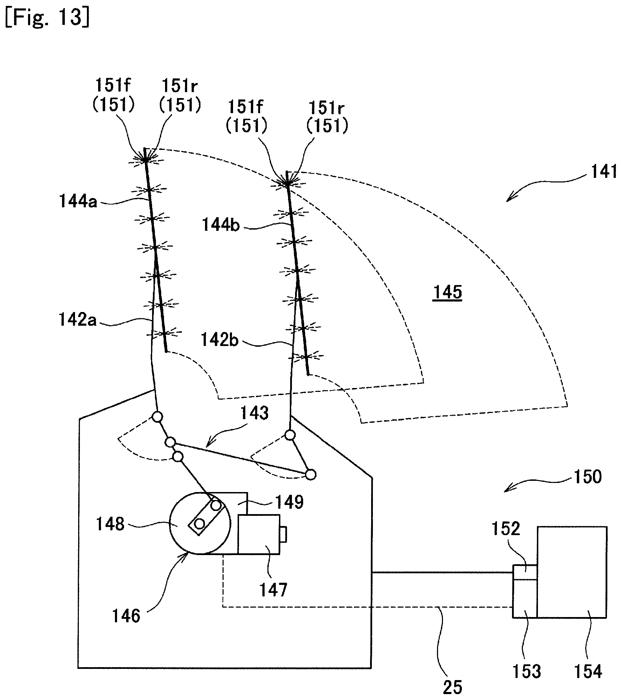

Next, as a sixth embodiment of the present invention, a case where the present invention is applied to a wiper system in which the front wiper is actuated by one motor, and washer liquid is ejected in two directions by rotationally driving another motor forward and backward will be described. FIG. 13 is an explanatory view illustrating the configuration of a wiper system 141 according to the sixth embodiment. The control device in the present embodiment uses one FET module to rotationally drive one front wiper motor in one direction and rotationally drive one washer motor forward and backward.

As illustrated in FIG. 13, the wiper system 141 has a driver's seat side wiper arm 142a and an assistant's seat side wiper arm 142b. The wiper arms 142a and 142b are connected to each other by a link mechanism 143. The wiper arms 142a and 142b are attached with wiper blades 144a and 144b, respectively, for wiping the glass surface. The wiper blades 144a and 144b are brought into elastic contact with a windshield 145. The link mechanism 143 is connected to a motor unit 146. The wiper blades 144a and 144b are driven by the motor unit 146.

In a window washer device 150 of the wiper system 141, washer nozzles 151 (151f: first washer nozzles, 151r: second washer nozzles) for ejecting washer liquid onto the glass surface are formed in each of the wiper blades 144a and 144b. The washer nozzles 151 are supplied with washer liquid from a washer pump 152. The washer pump 152 is driven by a washer motor (other motor) 153 to supply washer liquid stored in a washer tank 154 to the washer nozzles 151 at a predetermined pressure. The washer liquid is sprayed from the washer nozzles 151 at a pressure according to the rotating speed of the washer motor 153.

Like the washer nozzles 55 of FIG. 5, the washer nozzles 151 are formed in both side surfaces of each of the wiper blades 144a and 144b. Washer nozzles 151f are formed in one surface side of each of the wiper blades 144a and 144b, and washer nozzles 151r are formed in the other surface side thereof. Washer liquid is ejected from the nozzles on the front side in the travel direction of each of the wiper blades 144a and 144b. That is, when the wiper blades 144a and 144b are moved forward, the washer liquid is sprayed from the washer nozzles 151f, while when the wiper blades 144a and 144b are moved backward, the washer liquid is sprayed from the washer nozzles 151r. Switching between the nozzles 151f and 151r is achieved by switching of the rotation direction (forward and backward rotation) of the washer motor 153.

The motor unit 146 has a wiper motor 147 and a decelerating mechanism 148. The motor unit 146 is integrally provided with a controller (wiper system control device) 149. Both the wiper motor 147 and the washer motor 153 are controlled by the controller 149. The controller 149 has the same configuration as the controller 9 illustrated in FIG. 2 and is provided with the control board 11 mounting a FET module 160 and the like thereon.

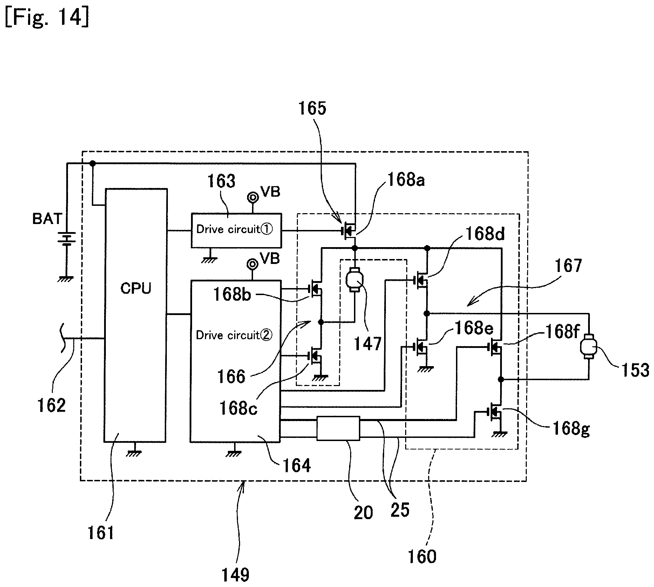

FIG. 14 is a block diagram illustrating the circuit configuration of the controller 149. As illustrated in FIG. 14, the controller 149 has a CPU 161 in which a control program is installed. The CPU 161 is connected to an unillustrated vehicle-side controller (ECU) through an on-vehicle LAN 162. The controller 149 further has a first drive circuit 163, a second drive circuit 164, a FET module 160, and the rotation signal transmitting/receiving part 20. The CPU 161 controls ON/OFF or rotating speed of the wiper motor 147 based on an instruction issued by the ECU. Further, the CPU 161 controls forward and backward rotation or rotating speed of the washer motor 153 in conjunction with operation of an unillustrated window washer switch. Under such control, washer liquid is ejected onto the glass surface appropriately from the washer nozzles 151f or 151r.

Also in the wiper system 141, the general-purpose FET module used for driving a three-phase brushless motor is used as the FET module 160 of the controller 149. In the wiper system 141, two FETs are used for rotationally driving the wiper motor 147 in one direction, and four FETs are used to rotationally drive the washer motor 153 forward and backward. That is, of the six FETs for drive of the respective phases, and two FETs are used for drive (unidirectional rotation) of the wiper motor 147 and the remaining four FETs for forward and backward rotational drive of the washer motor 153. As illustrated in FIG. 14, the FET module 160 is partitioned into a battery reverse connection protection part 165, a (front) wiper motor drive part 166, and a washer motor drive part 167. The battery reverse connection protection part 165 is provided with one FET 168a, the wiper motor drive part 166 is provided with two FETs 168b and 168c, and the washer motor drive part 167 is provided with four FETs 168d to 168g. In the washer motor drive part 167, a bridge circuit for forward and backward rotational drive of the washer motor 153 is formed by the FETs 168d to 168g.

In the FET module 160, the FETs 168b and 168c are turned ON/OFF appropriately by the CPU 161 and the first and second drive circuits 163 and 164 to thereby control operation of the wiper motor 147. Further, the FETs 168d to 168g are turned ON/OFF appropriately by the CPU 161 and the first and second drive circuits 163 and 164 in conjunction with operation of the window washer switch to thereby control forward and backward rotational drive of the washer motor 153. Under the above control, the wiper arms 142a and 142b perform reciprocating wiping operation on the glass surface and washer liquid is ejected onto the glass surface appropriately toward the blade travel direction in sync with movement of the wiper arms 142a and 142b.

As described above, in the present invention, the general-purpose FET module for three-phase motor drive is diverted to control the wiper system to constitute the controller 149 by a FET module incorporating the wiper drive FETs, washer drive FETs, and reverse connection protection FET in one package. As a result, it is possible to realize a compact controller capable of controlling both the wiper motor and the washer motor without involving increase in the size of the drive circuit. Further, it is possible to realize a circuit capable of achieving fine ejection control (e.g., switching the ejection direction between the forward travel and the backward travel) of the washer liquid in a compact layout.

In the sixth embodiment, washer liquid is ejected while switching between the washer nozzles 151f and 151r formed on both side surfaces of each of the wiper blades 144a and 144b by forward and backward rotational drive of the washer motor 153; alternatively, however, washer liquid may be ejected while switching between the washer nozzles formed on the front side and rear side by forward and backward rotational drive of the washer motor.

### (Seventh Embodiment)

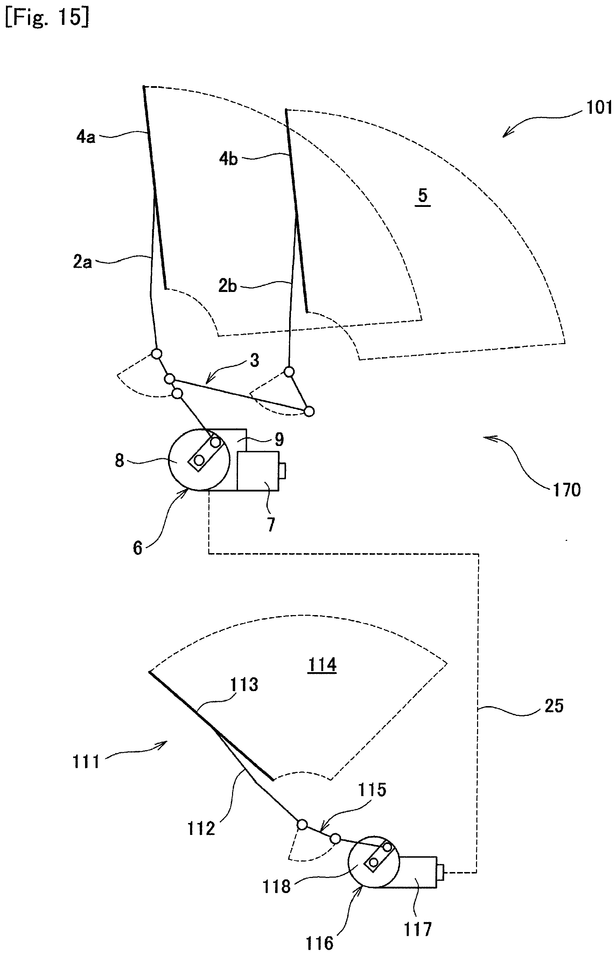

FIG. 15 is an explanatory view illustrating the configuration of a wiper system 170 according to a seventh embodiment of the present invention. The wiper system 170 has the front wiper 101 and the rear wiper 111. The control device in the present embodiment uses one FET module to rotationally drive one front wiper motor in one direction and rotationally drive one rear wiper motor forward and backward.

As illustrated in FIG. 15, the configurations of the front wiper 101 and the rear wiper 111 are the same as those in the wiper system 100 of FIG. 11. However, in the wiper system 170, the window washer device 15 of FIG. 11 is not set as a control target. The front wiper 101 is driven by the front wiper motor 7, and the rear wiper 111 is driven by the rear wiper motor 117. The wiper motors 7 and 117 are controlled by a controller 171.

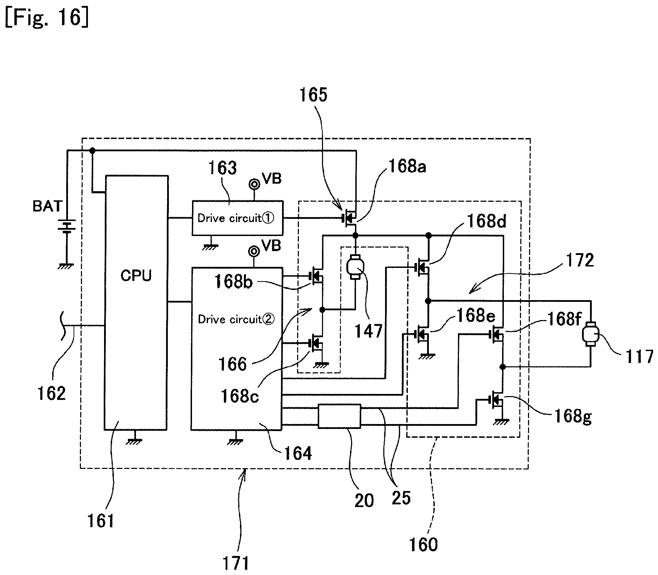

FIG. 16 is a block diagram illustrating the circuit configuration of the controller 171. The controller 171 has the same configuration as that of the controller 149 of FIG. 14 except that a target to be subjected to forward and backward rotational drive is not the washer motor, but the rear wiper motor 117. That is, a rear wiper motor drive part 172 is provided in place of the washer motor drive part 67 of FIG. 16.

In the wiper system 170, the FET module 160 is partitioned into the battery reverse connection protection part 165, front wiper motor drive part 166, and a rear wiper motor drive part 172. The battery reverse connection protection part 165 is provided with one FET 168a, the front wiper motor drive part 166 is provided with two FETs 168b and 168c, and the rear wiper motor drive part 172 is provided with four FETs 168d to 168g. In the rear wiper motor drive part 172, a bridge circuit for forward and backward rotational drive of the rear wiper motor 117 is formed by the FETs 168d to 168g.

Also in the wiper system 170, the general-purpose FET module for three-phase motor drive is diverted to control of the wiper system to constitute the controller 171. As a result, it is possible to realize a compact controller capable of controlling both the front wiper motor and the rear wiper motor without involving increase in the size of the drive circuit.

The present invention is not limited to the above embodiments, but various modifications can be made without departing from the scope of the invention.

For example, in the above embodiments, the present invention is applied to the wiper system of a parallel wiping type rotationally driven forward and backward by one motor (first and third embodiments), the wiper system of an opposing wiping type rotationally driven forward and backward by two motors (second and fourth embodiments), and the wiper system of a parallel wiping type rotationally driven in one direction by one motor (fifth to seventh embodiments) ; however, the present invention may be applied to wiper systems of other embodiments, such as a wiper system of a parallel wiping type rotationally driven forward and backward by two motors. That is, the present invention may be applied to any wiper system as long as seven FETs can be appropriately assigned thereto for drive of, for example, the front wiper motor, rear wiper motor, and washer motor.

Further, while the structure of the controller in the wiper motor is not especially illustrated in the second and subsequent embodiments, the heat plate can be used for miniaturization of the device in the controllers of the second and subsequent embodiments, as in the first embodiment. Further, in the above some embodiments, the washer nozzles are formed on both side surfaces of each wiper blade as illustrated in FIGS. 4, 5, and 13; however, the present invention is not limited to this. For example, the washer nozzles may be formed in the wiper arm or a vehicle body.

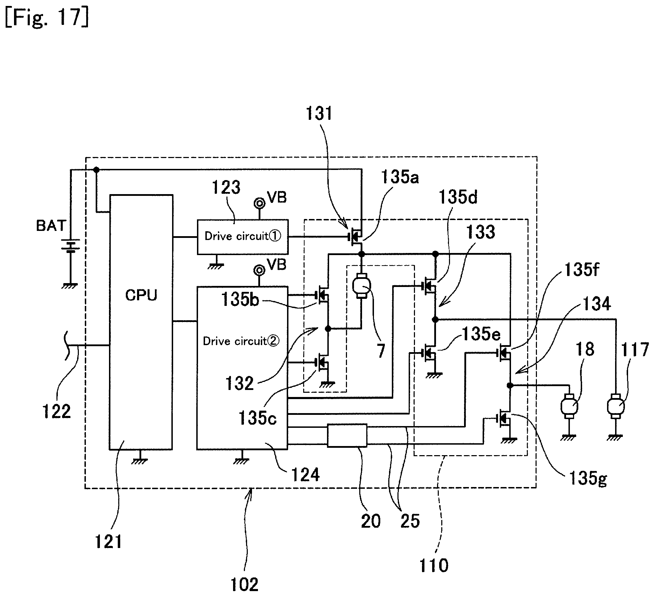

Further, the circuit configuration of the controller according to the sixth embodiment is not limited to that illustrated in FIG. 12. For example, the controller according to the sixth embodiment may employ the configuration of a high-side drive type as illustrated in FIG. 17.

### Reference Signs List

- 1:: Wiper system
- 2a, 2b:: Wiper arm
- 3:: Link mechanism
- 4a, 4b:: Wiper blade
- 5:: Windshield
- 6:: Motor unit
- 7:: Wiper motor (front wiper motor)
- 8:: Decelerating mechanism
- 9:: Controller
- 10:: FET module
- 11:: Control board
- 12:: Heat plate
- 13:: Frame
- 15:: Window washer device
- 16:: Washer nozzle
- 17:: Washer pump
- 18:: Washer motor
- 19:: Washer tank
- 20:: Rotation signal transmitting/receiving part
- 21:: CPU
- 22:: ROM
- 23:: First drive circuit
- 24:: Second drive circuit
- 25:: Signal line
- 31:: Battery reverse connection protection part
- 32:: Wiper motor drive part
- 33:: Washer motor drive part
- 34a to 34g:: FET
- 40:: Wiper system
- 41a, 41b:: Wiper arm
- 42a, 42b:: Wiper blade
- 43:: Windshield
- 44a, 44b:: Wiper shaft
- 45:: Wiping range
- 46a, 46b:: Motor unit
- 47a:: Wiper motor
- 47b:: Wiper motor
- 48:: Decelerating mechanism
- 50a, 50b:: Controller
- 51a, 51b:: CPU
- 52a, 52b:: First drive circuit
- 53a, 53b:: Second drive circuit
- 54a, 54b:: FET module
- 55f, 55r:: Washer nozzle
- 56:: Washer pump
- 57:: Washer motor
- 58:: Washer tank
- 59:: Signal line
- 61a, 61b:: Battery reverse connection protection part
- 62a, 62b:: Wiper motor drive part (front wiper motor drive part)
- 63a, 63b:: Washer motor drive part
- 64a to 64g:: FET
- 71:: ECU
- 72:: On-vehicle LAN
- 73:: Communication line
- 80:: Wiper system
- 81:: Front wiper
- 82:: Front wiper motor
- 83:: Controller
- 84:: Motor unit
- 85:: Rear wiper
- 86:: Rear windshield
- 87:: Wiper arm
- 88:: Rear wiper blade
- 89:: Link mechanism
- 91:: Rear wiper motor
- 92:: Front wiper motor drive part
- 93:: Rear wiper motor drive part
- 95:: Wiper system
- 96:: Front wiper
- 97a, 97b:: Controller
- 98a, 98b:: Rear wiper motor drive part
- 100:: Wiper system
- 101:: Front wiper
- 102:: Controller
- 110:: FET module
- 111:: Rear wiper
- 112:: Wiper arm
- 113:: Wiper blade
- 114:: Rear windshield
- 115:: Link mechanism
- 116:: Motor unit
- 117:: Rear wiper motor
- 118:: Decelerating mechanism
- 121:: CPU
- 122:: On-vehicle LAN
- 123:: First drive circuit
- 124:: Second drive circuit
- 131:: Battery reverse connection protection part
- 132:: Front wiper motor drive part
- 133:: Rear wiper motor drive part
- 134:: Washer motor drive part
- 135a to 135g:: FET
- 141:: Wiper system
- 142a, 42b:: Wiper arm
- 143:: Link mechanism
- 144a, 144b:: Wiper blade
- 145:: Windshield
- 146:: Motor unit
- 147:: Wiper motor
- 148:: Decelerating mechanism
- 149:: Controller
- 150:: Wind washer device
- 151:: Washer nozzle
- 151f:: Washer nozzle
- 151r:: Washer nozzle
- 152:: Washer pump
- 153:: Washer motor
- 154:: Washer tank
- 160:: FET module
- 161:: CPU
- 162:: On-vehicle LAN
- 163:: First drive circuit
- 164:: Second drive circuit
- 165:: Battery reverse connection protection part
- 166:: Wiper motor drive part (front wiper motor drive part)
- 167:: Washer motor drive part
- 168a to 168g:: FET
- 170:: Wiper system
- 171:: Controller
- 172:: Rear wiper motor drive part

## Claims

1. A control device of a wiper system (1, 40, 80, 95, 100, 141, 170) provided with at least one wiper motor (7, 47a, 47b, 82, 91, 117, 147) and at least one other motor (18, 57, 153) different from the wiper motor (7, 47a, 47b, 82, 91, 117, 147), the control device being **characterized by** comprising a FET module (10, 54a, 54b, 110, 160) incorporating, in one package, at least two FETs (34b-34e, 64b-64e, 65b-65e, 135b-135e, 168b-168e) for drive of the wiper motor (7, 47a, 47b, 82, 91, 117, 147), at least two FETs (34f-34g, 64f-64g, 65f-65g, 135f-135g, 168f-168g) for drive of the other motor (18, 57, 153), and at least one FET (34a, 64a, 65a, 135a, 168a) for circuit protection at the time of power supply reverse connection.

2. The wiper system control device according to claim 1, **characterized in that**
the wiper system (1, 40, 80, 95, 100, 141, 170) has a front wiper (81, 96, 101) for wiping a windshield (5, 43, 145) of a vehicle and a front wiper motor (7, 47a, 47b, 82, 147) for driving the front wiper (81, 96, 101) as the wiper motor, and
the FET module (10, 54a, 54b, 110, 160) has four FETs for rotationally driving the front wiper motor (7, 47a, 47b, 82, 147) forward and backward, two FETs for rotationally driving the other motor (18) in one direction, and one FET for circuit protection at the time of power supply reverse connection.

3. The wiper system control device according to claim 1 or 2, **characterized in that**
the wiper system (1, 40, 80, 95, 100, 141, 170) has a washer nozzle (16, 55, 151) for spraying washer liquid onto the windshield (5, 43, 145) or a rear windshield (86, 114) of a vehicle, and
the other motor is a washer motor (18, 57, 153) configured to be rotationally driven in one direction so as to supply the washer liquid to the washer nozzle (16, 55, 151) and to spray the washer liquid onto the vehicle windshield (5, 43, 145) or rear windshield (86, 114).

4. The wiper system control device according to claim 1 or claim 2, **characterized in that**
the wiper system (1, 40, 80, 95, 100, 141, 170) has a rear wiper (85, 111) for wiping the vehicle rear windshield (86, 114), and
the other motor is a rear wiper motor (91, 117) for driving the rear wiper (85, 111).

5. The wiper system control device according to claim 1, **characterized in that**
the wiper system (1, 80, 100, 141, 170) has two wiper blades (4a, 4b, 42a, 42b) for wiping a windshield (5, 43, 145) of a vehicle,
a front wiper motor (7, 82, 147) for driving the wiper blades (4a, 4b) as the wiper motor, and
a link mechanism (3) installed between the wiper blades (4a, 4b) and the front wiper motor (7, 82, 147) to synchronously drive the two wiper blades (4a, 4b).

6. The wiper system control device according to claim 1, **characterized in that**
the wiper system (40, 95) has two wiper blades (42a, 42b) for wiping a windshield (5, 43, 145) of a vehicle and two front wiper motors (47a, 47b) for driving the respective wiper blades (42a, 42b) as the wiper motor, and
the wiper system control device uses the two FET modules (54a, 54b) to synchronously drive the two wiper blades (42a, 42b) .

7. The wiper system control device according to claim 6, **characterized in that**
the wiper system (40, 95) has a washer nozzle (16, 55, 151) for spraying washer liquid onto the windshield (5, 43, 145) or a rear windshield (86, 114) of the vehicle,
the other motor is a washer motor (18, 57, 153) configured to be rotationally driven in one direction so as to supply the washer liquid to the washer nozzle (16, 55, 151) and to spray the washer liquid onto the vehicle windshield (5, 43, 145) or rear windshield (86, 114), and
the wiper system control device uses two FETs (64f, 64g, 65f, 65g) in each of the two FET modules (10, 54a, 54b, 110, 160) to form a half-bridge circuit in each of the FET modules (10, 54a, 54b, 110, 160) and uses the two half-bridge circuits to rotationally drive the washer motor (18, 57, 153) forward and backward.

8. The wiper system control device according to claim 6, **characterized in that**
the wiper system (1, 40, 80, 95, 100, 141, 170) has a rear wiper (85, 111) for wiping a rear windshield (86, 114) of a vehicle,
the other motor is a rear wiper motor (91, 117) for driving the rear wiper (85, 111), and
the wiper system control device uses two FETs (64f, 64g, 65f, 65g) in each of the two FET modules (10, 54a, 54b, 110, 160) to form a half-bridge circuit in each of the FET modules (10, 54a, 54b, 110, 160) and uses the two half-bridge circuits to rotationally drive the rear wiper motor (91, 117) forward and backward.

9. The wiper system control device according to claim 1, **characterized in that**
the wiper system (1, 40, 80, 95, 100, 141, 170) has a front wiper (81, 96, 101) for wiping a windshield (5, 43, 145) of a vehicle, a rear wiper (85, 111) for wiping a rear windshield (86, 114) of the vehicle, and a washer nozzle (16, 55, 151) for spraying washer liquid onto the windshield (5, 43, 145) or rear windshield (86, 114),
the wiper motor is a front wiper motor (7, 47a, 47b, 82, 147) for driving the front wiper (81, 96, 101),
the other motor includes a rear wiper motor (91, 117) for driving the rear wiper (85, 111) and a washer motor (18, 57, 153) for supplying the washer liquid to the washer nozzle (16, 55, 151) and spraying the washer liquid onto the windshield (5, 43, 145) or rear windshield (86, 114), and
the FET module (10, 54a, 54b, 110, 160) has two FETs for rotationally driving the front wiper motor (7, 47a, 47b, 82, 147) in one direction, two FETs for rotationally driving the rear wiper motor (91, 117) in one direction, two FETs for rotationally driving the washer motor (18, 57, 153) in one direction, and one FET for circuit protection at the time of power supply reverse connection.

10. The wiper system control device according to claim 9, **characterized in that**
the wiper system (1, 40, 80, 95, 100, 141, 170) has two wiper blades (4a, 4b) for wiping the vehicle windshield (5, 43, 145),
a front wiper motor (7, 47a, 47b, 82, 147) for driving the two wiper blades (4a, 4b) as the wiper motor, and
a link mechanism (3) installed between the wiper blades (4a, 4b) and the front wiper motor (7, 47a, 47b, 82, 147) to synchronously drive the two wiper blades (4a, 4b).

11. The wiper system control device according to claim 1, **characterized in that**
the wiper system (1, 40, 80, 95, 100, 141, 170) has a front wiper (81, 96, 101) for wiping a windshield (5, 43, 145) of a vehicle and a plurality of washer nozzles (16, 55, 151) for spraying washer liquid onto the windshield (5, 43, 145) or the rear windshield (86, 114),
the wiper motor is a front wiper motor (7, 47a, 47b, 82, 147) for driving the front wiper (81, 96, 101),
the other motor is a washer motor (18, 57, 153) rotationally driven forward and backward so as to selectively supply the washer liquid to the washer nozzles (16, 55, 151) and to spray the washer liquid onto the vehicle windshield (5, 43, 145) or the rear windshield (86, 114), and
the FET module (10, 54a, 54b, 110, 160) has two FETs for rotationally driving the front wiper motor (7, 47a, 47b, 82, 147) in one direction, four FETs for rotationally driving the washer motor (18, 57, 153) forward and backward, and one FET for circuit protection at the time of power supply reverse connection.

12. The wiper system control device according to claim 1, **characterized in that**
the wiper system (1, 40, 80, 95, 100, 141, 170) has a front wiper (81, 96, 101) for wiping a windshield (5, 43, 145) of a vehicle and a rear wiper (85, 111) for wiping a rear windshield (86, 114) of the vehicle,
the wiper motor is a front wiper motor (7, 47a, 47b, 82, 147) for driving the front wiper (81, 96, 101),
the other motor is a rear wiper motor (91, 117) for driving the rear wiper (85, 111), and
the FET module (10, 54a, 54b, 110, 160) has two FETs for rotationally driving the front wiper motor (7, 47a, 47b, 82, 147) in one direction, four FETs for rotationally driving the rear wiper motor (91, 117) forward and backward, and one FET for circuit protection at the time of power supply reverse connection.

13. The wiper system control device according to any one of claims 1 to 12, **characterized in that**
the wiper system (1, 40, 80, 95, 100, 141, 170) has a front wiper (81, 96, 101) for wiping a windshield (5, 43, 145) of a vehicle and a front wiper motor (7, 47a, 47b, 82, 147) for driving the front wiper (81, 96, 101) as the wiper motor, and
the FET module (10, 54a, 54b, 110, 160) is mounted on a control board (11) incorporated in the front wiper motor (7, 47a, 47b, 82, 147).

14. The wiper system control device according to claim 13, **characterized in that**
the control board (11) has thereon a rotation signal transmitting/receiving part for transmitting and receiving a signal to rotate the other motor (18, 57, 153).

15. The wiper system control device according to claim 14, **characterized in that**
the wiper motor (7, 47a, 47b, 82, 91, 117, 147) and other motor (18, 57, 153) are connected to each other through a signal transmitting part for transmitting the signal.

## Patentansprüche

1. Steuervorrichtung eines Scheibenwischersystems (1, 40, 80, 95, 100, 141, 170), das mit mindestens einem Scheibenwischermotor (7, 47a, 47b, 82, 91, 117, 147) und mindestens einem anderen Motor (18, 57, 153) bereitgestellt ist, der sich vom Scheibenwischermotor (7, 47a, 47b, 82, 91, 117, 147) unterscheidet, wobei die Steuervorrichtung **dadurch gekennzeichnet ist, dass** sie ein FET-Modul (10, 54a, 54b, 110, 160) umfasst, das in einem Gehäuse mindestens zwei FETs (34b-34e,64b-64e, 65b-65e, 135b-135e, 168b-168e) für den Antrieb des Scheibenwischermotors (7, 47a, 47b, 82, 91, 117, 147), mindestens zwei FETs (34f-34g, 64f-64g, 65f-65g, 135f-135g, 168f-168g) für den Antrieb des anderen Motors (18, 57, 153) und mindestens einen FET (34a, 64a, 65a, 135a, 168a) für den Schaltungsschutz zum Zeitpunkt der Verpolung der Stromversorgung einbaut.

2. Scheibenwischersystem-Steuervorrichtung nach Anspruch 1, **dadurch gekennzeichnet, dass**
das Scheibenwischersystem (1, 40, 80, 95, 100, 141, 170) einen Frontscheibenwischer (81, 96, 101) zum Wischen einer Windschutzscheibe (5, 43, 145) eines Fahrzeugs und einen Frontscheibenwischermotor (7, 47a, 47b, 82, 147) zum Antreiben des Frontscheibenwischers (81, 96, 101) als den Scheibenwischermotor aufweist, und
das FET-Modul (10, 54a, 54b, 110, 160) vier FETs für den Drehantrieb des Frontscheibenwischermotors (7, 47a, 47b, 82, 147) vorwärts und rückwärts, zwei FETs für den Drehantrieb des anderen Motors (18) in einer Richtung und einen FET für den Schaltungsschutz zum Zeitpunkt der Verpolung der Stromzufuhr aufweist.

3. Scheibenwischersystem-Steuervorrichtung nach Anspruch 1 oder 2, **dadurch gekennzeichnet, dass**
das Scheibenwischersystem (1, 40, 80, 95, 100, 141, 170) eine Waschdüse (16, 55, 151) zum Aufsprühen von Waschflüssigkeit auf die Windschutzscheibe (5,43, 145) oder eine Heckscheibe (86, 114) eines Fahrzeugs aufweist, und
der andere Motor ein Waschmotor (18, 57, 153) ist, der so konfiguriert ist, dass er in einer Richtung drehend angetrieben werden kann, um der Waschdüse (16, 55, 151) die Waschflüssigkeit zuzuführen und um die Waschflüssigkeit auf die Windschutzscheibe (5, 43, 145) oder die Heckscheibe (86, 114) des Fahrzeugs aufzusprühen.

4. Scheibenwischersystem-Steuervorrichtung nach Anspruch 1 oder 2, **dadurch gekennzeichnet, dass**
das Scheibenwischersystem (1, 40, 80, 95, 100, 141, 170) einen Heckscheibenwischer (85, 111) zum Wischen der Fahrzeugheckscheibe (86, 114) aufweist, und
der andere Motor ein Heckscheibenwischermotor (91, 117) zum Antreiben des Heckscheibenwischers (85, 111) ist.

5. Scheibenwischersystem-Steuervorrichtung nach Anspruch 1, **dadurch gekennzeichnet, dass**
das Scheibenwischersystem (1, 80, 100, 141, 170) zwei Wischblätter (4a, 4b, 42a, 42b) zum Wischen einer Windschutzscheibe (5, 43, 145) eines Fahrzeugs aufweist,
einen Frontscheibenwischermotor (7, 82, 147) zum Antreiben der Wischblätter (4a, 4b) als den Scheibenwischermotor und
einen Verbindungsmechanismus (3), der zwischen den Wischblättern (4a, 4b) und dem Frontscheibenwischermotor (7, 82, 147) installiert ist, um die zwei Wischblätter (4a, 4b) synchron anzutreiben.

6. Scheibenwischersystem-Steuervorrichtung nach Anspruch 1, **dadurch gekennzeichnet, dass**
das Scheibenwischersystem (40, 95) zwei Wischblätter (42a, 42b) zum Wischen einer Windschutzscheibe (5, 43, 145) eines Fahrzeugs und zwei Frontscheibenwischermotoren (47a, 47b) zum Antreiben der jeweiligen Wischblätter (42a, 42b) als den Scheibenwischermotor aufweist und
die Scheibenwischersystem-Steuervorrichtung die zwei FET-Module (54a, 54b) verwendet, um die zwei Wischblätter (42a, 42b) synchron anzutreiben.

7. Scheibenwischersystem-Steuervorrichtung nach Anspruch 6, **dadurch gekennzeichnet, dass**
das Scheibenwischersystem (40, 95) eine Waschdüse (16, 55, 151) zum Aufsprühen von Waschflüssigkeit auf die Windschutzscheibe (5, 43, 145) oder eine Heckscheibe (86, 114) des Fahrzeugs aufweist,
der andere Motor ein Waschmotor (18, 57, 153) ist, der so konfiguriert ist, dass er in einer Richtung drehend angetrieben wird, um der Waschdüse (16, 55, 151) die Waschflüssigkeit zuzuführen und um die Waschflüssigkeit auf die Windschutzscheibe (5, 43, 145) oder die Heckscheibe (86, 114) des Fahrzeugs aufzusprühen,
und
die Scheibenwischersystem-Steuervorrichtung zwei FETs (64f, 64g, 65f, 65g) in jedem der zwei FET-Module (10, 54a, 54b, 110, 160) verwendet, um eine Halbbrückenschaltung in jedem der FET-Module (10, 54a, 54b, 110, 160) zu bilden, und die zwei Halbbrückenschaltungen verwendet, um den Waschmotor (18, 57, 153) vorwärts und rückwärts drehend anzutreiben.

8. Scheibenwischersystem-Steuervorrichtung nach Anspruch 6, **dadurch gekennzeichnet, dass**
das Scheibenwischersystem (1, 40, 80, 95, 100, 141, 170) einen Heckscheibenwischer (85, 111) zum Wischen einer Heckscheibe (86, 114) eines Fahrzeugs aufweist,
der andere Motor ein Heckscheibenwischermotor (91, 117) zum Antreiben des Heckscheibenwischers (85, 111) ist und
die Scheibenwischersystem-Steuervorrichtung zwei FETs (64f, 64g, 65f, 65g) in jedem der zwei FET-Module (10, 54a, 54b, 110, 160) verwendet, um eine Halbbrückenschaltung in jedem der FET-Module (10, 54a, 54b, 110, 160) zu bilden, und die zwei Halbbrückenschaltungen verwendet, um den Heckscheibenwischermotor (91, 117) vorwärts und rückwärts drehend anzutreiben.

9. Scheibenwischersystem-Steuervorrichtung nach Anspruch 1, **dadurch gekennzeichnet, dass**
das Scheibenwischersystem (1, 40, 80, 95, 100, 141, 170) einen Frontscheibenwischer (81, 96, 101) zum Wischen einer Windschutzscheibe (5, 43, 145) eines Fahrzeugs, einen Heckscheibenwischer (85, 111) zum Wischen einer Heckscheibe (86, 114) des Fahrzeugs und eine Waschdüse (16, 55, 151) zum Aufsprühen von Waschflüssigkeit auf die Windschutzscheibe (5, 43, 145) oder Heckscheibe (86, 114) aufweist,
der Scheibenwischermotor ein Frontscheibenwischermotor (7, 47a, 47b, 82, 147) zum Antreiben des Frontscheibenwischers (81, 96, 101) ist,
der andere Motor einen Heckscheibenwischermotor (91, 117) zum Antreiben des Heckscheibenwischers (85, 111) und einen Waschmotor (18, 57, 153) zum Zuführen der Waschflüssigkeit zu der Waschdüse (16, 55, 151) und zum Aufsprühen der Waschflüssigkeit auf die Windschutzscheibe (5, 43, 145) oder Heckscheibe (86, 114) einschließt, und
das FET-Modul (10, 54a, 54b, 110, 160) zwei FETs für den Drehantrieb des Frontscheibenwischermotors (7, 47a, 47b, 82, 147) in einer Richtung, zwei FETs für den Drehantrieb des Heckscheibenwischermotors (91, 117) in einer Richtung, zwei FETs für den Drehantrieb des Waschmotors (18, 57, 153) in einer Richtung und einen FET für den Schaltungsschutz zum Zeitpunkt der Verpolung der Stromversorgung aufweist.

10. Scheibenwischersystem-Steuervorrichtung nach Anspruch 9, **dadurch gekennzeichnet, dass**
das Scheibenwischersystem (1, 40, 80, 95, 100, 141, 170) zwei Wischblätter (4a, 4b) zum Wischen der Windschutzscheibe des Fahrzeugs (5, 43, 145) aufweist,
einen Frontscheibenwischermotor (7, 47a, 47b, 82, 147) zum Antreiben der zwei Wischblätter (4a, 4b) als den Scheibenwischermotor und
einen Verbindungsmechanismus (3), der zwischen den Wischblättern (4a, 4b) und dem Frontscheibenwischermotor (7, 47a, 47b, 82, 147) installiert ist, um die zwei Wischblätter (4a, 4b) synchron anzutreiben.

11. Scheibenwischersystem-Steuervorrichtung nach Anspruch 1, **dadurch gekennzeichnet, dass**
das Scheibenwischersystem (1, 40, 80, 95, 100, 141, 170) einen Frontscheibenwischer (81, 96, 101) zum Wischen einer Windschutzscheibe (5, 43, 145) eines Fahrzeugs und eine Vielzahl von Waschdüsen (16, 55, 151) zum Aufsprühen von Waschflüssigkeit auf die Windschutzscheibe (5, 43, 145) oder die Heckscheibe (86, 114) aufweist,
der Scheibenwischermotor ein Frontscheibenwischermotor (7, 47a, 47b, 82, 147) zum Antreiben des Frontscheibenwischers (81, 96, 101) ist,
der andere Motor ein Waschmotor (18, 57, 153) ist, der vorwärts und rückwärts drehend angetrieben wird, um den Waschdüsen (16, 55, 151) die Waschflüssigkeit selektiv zuzuführen und um die Waschflüssigkeit auf die Windschutzscheibe (5, 43, 145) oder die Heckscheibe (86, 114) des Fahrzeugs aufzusprühen, und
das FET-Modul (10, 54a, 54b, 110, 160) zwei FETs für den Drehantrieb des Frontscheibenwischermotors (7, 47a, 47b, 82, 147) in einer Richtung, vier FETs für den Drehantrieb des Waschmotors (18, 57, 153) vorwärts und rückwärts und einen FET für den Schaltungsschutz zum Zeitpunkt der Verpolung der Stromzufuhr aufweist.

12. Scheibenwischersystem-Steuervorrichtung nach Anspruch 1, **dadurch gekennzeichnet, dass**
das Scheibenwischersystem (1, 40, 80, 95, 100, 141, 170) einen Frontscheibenwischer (81, 96, 101) zum Wischen einer Windschutzscheibe (5, 43, 145) eines Fahrzeugs und einen Heckscheibenwischer (85, 111) zum Wischen einer Heckscheibe (86, 114) des Fahrzeugs aufweist,
der Scheibenwischermotor ein Frontscheibenwischermotor (7, 47a, 47b, 82, 147) zum Antreiben des Frontscheibenwischers (81, 96, 101) ist,
der andere Motor ein Heckscheibenwischermotor (91, 117) zum Antreiben des Heckscheibenwischers (85, 111) ist und
das FET-Modul (10, 54a, 54b, 110, 160) zwei FETs für den Drehantrieb des Frontscheibenwischermotors (7, 47a, 47b, 82, 147) in einer Richtung, vier FETs für den Drehantrieb des Heckscheibenwischermotors (91, 117) vorwärts und rückwärts und einen FET für den Schaltungsschutz zum Zeitpunkt der Verpolung der Stromzufuhr aufweist.

13. Scheibenwischersystem-Steuervorrichtung nach einem der Ansprüche 1 bis 12, **dadurch gekennzeichnet, dass**
das Scheibenwischersystem (1, 40, 80, 95, 100, 141, 170) einen Frontscheibenwischer (81, 96, 101) zum Wischen einer Windschutzscheibe (5, 43, 145) eines Fahrzeugs und einen Frontscheibenwischermotor (7, 47a, 47b, 82, 147) zum Antreiben des Frontscheibenwischers (81, 96, 101) als den Scheibenwischermotor aufweist und
das FET-Modul (10, 54a, 54b, 110, 160) auf einer Steuerplatine (11) montiert ist, die in den Frontscheibenwischermotor (7, 47a, 47b, 82, 147) eingebaut ist.

14. Scheibenwischersystem-Steuervorrichtung nach Anspruch 13, **dadurch gekennzeichnet, dass**
die Steuerplatine (11) ein Drehsignal-Sende-/Empfangsteil zum Senden und Empfangen eines Signals zum Drehen des anderen Motors (18, 57, 153) darauf aufweist.

15. Scheibenwischersystem-Steuervorrichtung nach Anspruch 14, **dadurch gekennzeichnet, dass**
der Scheibenwischermotor (7, 47a, 47b, 82, 91, 117, 147) und der andere Motor (18, 57, 153) über einen Signalsendeteil zum Senden des Signals miteinander verbunden sind.

## Revendications

1. Dispositif de commande d'un système d'essuie-glace (1, 40, 80, 95, 100, 141, 170) pourvu d'au moins un moteur d'essuie-glace (7, 47a, 47b, 82, 91, 117, 147) et d'au moins un autre moteur (18, 57, 153) différent du moteur d'essuie-glace (7, 47a, 47b, 82, 91, 117, 147), le dispositif de commande étant **caractérisé en ce qu'**il comprend un module FET (10, 54a, 54b, 110, 160) intégrant, dans un paquet, au moins deux FET (34b-34e, 64b-64e, 65b-65e, 135b-135e, 168b-168e) pour l'entraînement du moteur d'essuie-glace (7, 47a, 47b, 82, 91, 117, 147), au moins deux FET (34f-34g, 64f-64g, 65f-65g, 135f-135g, 168f-168g) pour l'entraînement de l'autre moteur (18, 57, 153), et au moins un FET (34a, 64a, 65a, 135a, 168a) pour la protection de circuit au moment du raccordement inversé d'alimentation électrique.

2. Dispositif de commande de système d'essuie-glace selon la revendication 1, **caractérisé en ce que**
le système d'essuie-glace (1, 40, 80, 95, 100, 141, 170) présente un essuie-glace avant (81, 96, 101) pour essuyer un pare-brise (5, 43, 145) d'un véhicule et un moteur d'essuie-glace avant (7, 47a, 47b, 82, 147) pour entraîner l'essuie-glace avant (81, 96, 101) en tant que moteur d'essuie-glace, et
le module FET (10, 54a, 54b, 110, 160) présente quatre FET pour entraîner en rotation le moteur d'essuie-glace avant (7, 47a, 47b, 82, 147) vers l'avant et vers l'arrière, deux FET pour entraîner en rotation l'autre moteur (18) dans une direction, et un FET pour la protection de circuit au moment du raccordement inversé d'alimentation électrique.

3. Dispositif de commande de système d'essuie-glace selon la revendication 1 ou 2, **caractérisé en ce que**
le système d'essuie-glace (1, 40, 80, 95, 100, 141, 170) présente une buse de lave-glace (16, 55, 151) pour pulvériser du liquide lave-glace sur le pare-brise (5, 43, 145) ou un pare-brise arrière (86, 114) d'un véhicule, et
l'autre moteur est un moteur de lave-glace (18, 57, 153) configuré pour être entraîné en rotation dans une direction de manière à fournir le liquide lave-glace à la buse de lave-glace (16, 55, 151) et à pulvériser le liquide lave-glace sur le pare-brise (5, 43, 145) ou le pare-brise arrière (86, 114) de véhicule.

4. Dispositif de commande de système d'essuie-glace selon la revendication 1 ou la revendication 2, **caractérisé en ce que**
le système d'essuie-glace (1, 40, 80, 95, 100, 141, 170) présente un essuie-glace arrière (85, 111) pour essuyer le pare-brise arrière (86, 114) de véhicule, et
l'autre moteur est un moteur d'essuie-glace arrière (91, 117) pour entraîner l'essuie-glace arrière (85, 111).

5. Dispositif de commande de système d'essuie-glace selon la revendication 1, **caractérisé en ce que**
le système d'essuie-glace (1, 80, 100, 141, 170) présente deux balais d'essuie-glace (4a, 4b, 42a, 42b) pour essuyer un pare-brise (5, 43, 145) d'un véhicule,
un moteur d'essuie-glace avant (7, 82, 147) pour entraîner les balais d'essuie-glace (4a, 4b) en tant que moteur d'essuie-glace, et
un mécanisme de liaison (3) installé entre les balais d'essuie-glace (4a, 4b) et le moteur d'essuie-glace avant (7, 82, 147) pour entraîner de manière synchrone les deux balais d'essuie-glace (4a, 4b).

6. Dispositif de commande de système d'essuie-glace selon la revendication 1, **caractérisé en ce que**
le système d'essuie-glace (40, 95) présente deux balais d'essuie-glace (42a, 42b) pour essuyer un pare-brise (5, 43, 145) d'un véhicule et deux moteurs d'essuie-glace avant (47a, 47b) pour entraîner les balais d'essuie-glace respectifs (42a, 42b) en tant que moteur d'essuie-glace, et
le dispositif de commande de système d'essuie-glace utilise les deux modules FET (54a, 54b) pour entraîner de manière synchrone les deux balais d'essuie-glace (42a, 42b).

7. Dispositif de commande de système d'essuie-glace selon la revendication 6, **caractérisé en ce que**
le système d'essuie-glace (40, 95) présente une buse de lave-glace (16, 55, 151) pour pulvériser du liquide lave-glace sur le pare-brise (5, 43, 145) ou un pare-brise arrière (86, 114) du véhicule,
l'autre moteur est un moteur de lave-glace (18, 57, 153) configuré pour être entraîné en rotation dans une direction de manière à fournir le liquide lave-glace à la buse de lave-glace (16, 55, 151) et à pulvériser le liquide lave-glace sur le pare-brise (5, 43, 145) ou le pare-brise arrière (86, 114) de véhicule, et
le dispositif de commande de système d'essuie-glace utilise deux FET (64f, 64g, 65f, 65g) dans chacun des deux modules FET (10, 54a, 54b, 110, 160) pour former un circuit en demi-pont dans chacun des modules FET (10, 54a, 54b, 110, 160) et utilise les deux circuits en demi-pont pour entraîner en rotation le moteur de lave-glace (18, 57, 153) vers l'avant et vers l'arrière.

8. Dispositif de commande de système d'essuie-glace selon la revendication 6, **caractérisé en ce que**
le système d'essuie-glace (1, 40, 80, 95, 100, 141, 170) présente un essuie-glace arrière (85, 111) pour essuyer un pare-brise arrière (86, 114) d'un véhicule,
l'autre moteur est un moteur d'essuie-glace arrière (91, 117) pour entraîner l'essuie-glace arrière (85, 111), et
le dispositif de commande de système d'essuie-glace utilise deux FET (64f, 64g, 65f, 65g) dans chacun des deux modules FET (10, 54a, 54b, 110, 160) pour former un circuit en demi-pont dans chacun des modules FET (10, 54a, 54b, 110, 160) et utilise les deux circuits en demi-pont pour entraîner en rotation le moteur d'essuie-glace arrière (91, 117) vers l'avant et vers l'arrière.

9. Dispositif de commande de système d'essuie-glace selon la revendication 1, **caractérisé en ce que**
le système d'essuie-glace (1, 40, 80, 95, 100, 141, 170) présente un essuie-glace avant (81, 96, 101) pour essuyer un pare-brise (5, 43, 145) d'un véhicule, un essuie-glace arrière (85, 111) pour essuyer un pare-brise arrière (86, 114) du véhicule, et une buse de lave-glace (16, 55, 151) pour pulvériser du liquide lave-glace sur le pare-brise (5, 43, 145) ou le pare-brise arrière (86, 114),
le moteur d'essuie-glace est un moteur d'essuie-glace avant (7, 47a, 47b, 82, 147) pour entraîner l'essuie-glace avant (81, 96, 101),
l'autre moteur inclut un moteur d'essuie-glace arrière (91, 117) pour entraîner l'essuie-glace arrière (85, 111) et un moteur de lave-glace (18, 57, 153) pour fournir le liquide lave-glace à la buse de lave-glace (16, 55, 151) et pulvériser le liquide lave-glace sur le pare-brise (5, 43, 145) ou le pare-brise arrière (86, 114), et
le module FET (10, 54a, 54b, 110, 160) présente deux FET pour entraîner en rotation le moteur d'essuie-glace avant (7, 47a, 47b, 82, 147) dans une direction, deux FET pour entraîner en rotation le moteur d'essuie-glace arrière (91, 117) dans une direction, deux FET pour entraîner en rotation le moteur de lave-glace (18, 57, 153) dans une direction, et un FET pour la protection de circuit au moment du raccordement inversé d'alimentation électrique.

10. Dispositif de commande de système d'essuie-glace selon la revendication 9, **caractérisé en ce que**
le système d'essuie-glace (1, 40, 80, 95, 100, 141, 170) présente deux balais d'essuie-glace (4a, 4b) pour essuyer le pare-brise (5, 43, 145) de véhicule,
un moteur d'essuie-glace avant (7, 47a, 47b, 82, 147) pour entraîner les deux balais d'essuie-glace (4a, 4b) en tant que moteur d'essuie-glace, et
un mécanisme de liaison (3) installé entre les balais d'essuie-glace (4a, 4b) et le moteur d'essuie-glace avant (7, 47a, 47b, 82, 147) pour entraîner de manière synchrone les deux balais d'essuie-glace (4a, 4b).

11. Dispositif de commande de système d'essuie-glace selon la revendication 1, **caractérisé en ce que**
le système d'essuie-glace (1, 40, 80, 95, 100, 141, 170) présente un essuie-glace avant (81, 96, 101) pour essuyer un pare-brise (5, 43, 145) d'un véhicule et une pluralité de buses de lave-glace (16, 55, 151) pour pulvériser du liquide lave-glace sur le pare-brise (5, 43, 145) ou le pare-brise arrière (86, 114),
le moteur d'essuie-glace est un moteur d'essuie-glace avant (7, 47a, 47b, 82, 147) pour entraîner l'essuie-glace avant (81, 96, 101),
l'autre moteur est un moteur de lave-glace (18, 57, 153) entraîné en rotation vers l'avant et vers l'arrière de manière à fournir sélectivement le liquide lave-glace aux buses de lave-glace (16, 55, 151) et à pulvériser le liquide lave-glace sur le pare-brise de véhicule (5, 43, 145) ou le pare-brise arrière (86, 114), et
le module FET (10, 54a, 54b, 110, 160) présente deux FET pour entraîner en rotation le moteur d'essuie-glace avant (7, 47a, 47b, 82, 147) dans une direction, quatre FET pour entraîner en rotation le moteur de lave-glace (18, 57, 153) vers l'avant et vers l'arrière, et un FET pour la protection de circuit au moment du raccordement inversé d'alimentation électrique.

12. Dispositif de commande de système d'essuie-glace selon la revendication 1, **caractérisé en ce que**
le système d'essuie-glace (1, 40, 80, 95, 100, 141, 170) présente un essuie-glace avant (81, 96, 101) pour essuyer un pare-brise (5, 43, 145) d'un véhicule et un essuie-glace arrière (85, 111) pour essuyer un pare-brise arrière (86, 114) du véhicule,
le moteur d'essuie-glace est un moteur d'essuie-glace avant (7, 47a, 47b, 82, 147) pour entraîner l'essuie-glace avant (81, 96, 101),
l'autre moteur est un moteur d'essuie-glace arrière (91, 117) pour entraîner l'essuie-glace arrière (85, 111), et
le module FET (10, 54a, 54b, 110, 160) présente deux FET pour entraîner en rotation le moteur d'essuie-glace avant (7, 47a, 47b, 82, 147) dans une direction, quatre FET pour entraîner en rotation le moteur d'essuie-glace arrière (91, 117) vers l'avant et vers l'arrière, et un FET pour la protection de circuit au moment du raccordement inversé d'alimentation électrique.

13. Dispositif de commande de système d'essuie-glace selon l'une quelconque des revendications 1 à 12, **caractérisé en ce que**
le système d'essuie-glace (1, 40, 80, 95, 100, 141, 170) présente un essuie-glace avant (81, 96, 101) pour essuyer un pare-brise (5, 43, 145) d'un véhicule et un moteur d'essuie-glace avant (7, 47a, 47b, 82, 147) pour entraîner l'essuie-glace avant (81, 96, 101) en tant que moteur d'essuie-glace, et
le module FET (10, 54a, 54b, 110, 160) est monté sur un tableau de commande (11) intégré dans le moteur d'essuie-glace avant (7, 47a, 47b, 82, 147).

14. Dispositif de commande de système d'essuie-glace selon la revendication 13, **caractérisé en ce que**
le tableau de commande (11) présente sur celui-ci une partie de transmission/réception de signal de rotation pour transmettre et recevoir un signal pour faire pivoter l'autre moteur (18, 57, 153).

15. Dispositif de commande de système d'essuie-glace selon la revendication 14, **caractérisé en ce que**
le moteur d'essuie-glace (7, 47a, 47b, 82, 91, 117, 147) et l'autre moteur (18, 57, 153) sont raccordés l'un à l'autre à travers une partie de transmission de signal pour transmettre le signal.
